(19) **Europäisches Patentamt / European Patent Office / Office européen des brevets**

(11) **EP 3 447 448 B1**

(12) **EUROPEAN PATENT SPECIFICATION**

(45) Date of publication and mention of the grant of the patent:
**06.01.2021   Bulletin 2021/01**

(51) Int Cl.:
**G01C 21/16** (2006.01)    **G01C 21/20** (2006.01)

(21) Application number: **18184739.3**

(22) Date of filing: **20.07.2018**

(54) **FAULT-TOLERANCE TO PROVIDE ROBUST TRACKING FOR AUTONOMOUS AND NON-AUTONOMOUS POSITIONAL AWARENESS**

FEHLERTOLERANZ FÜR EIN ROBUSTES TRACKING FÜR AUTONOMES UND NICHT-AUTONOMES POSITIONSBEWUSSTSEIN

TOLÉRANCE DE PANNE POUR FOURNIR UN SUIVI ROBUSTE DE CONNAISSANCE DE POSITIONNEMENT AUTONOME ET NON AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2017   US 201715658279**

(43) Date of publication of application:
**27.02.2019   Bulletin 2019/09**

(73) Proprietor: **Trifo, Inc.**
**Santa Clara, CA 95054 (US)**

(72) Inventors:
• **ZHANG, Zhe**
  **Sunnyvale, CA 94085 (US)**
• **TSAI, Grace**
  **Campbell, CA 95008 (US)**
• **LIU, Shaoshan**
  **Fremont, CA 94539 (US)**

(74) Representative: **Epping - Hermann - Fischer Patentanwaltsgesellschaft mbH**
**Schloßschmidstraße 5**
**80639 München (DE)**

(56) References cited:
**US-A1- 2016 209 217**

**Description**

## FIELD OF THE TECHNOLOGY DISCLOSED

The technology disclosed generally relates to detecting location and positioning of a mobile device, and more particularly relates to application of visual processing and inertial sensor data to positioning and guidance technologies.

## BACKGROUND

A problem mentioned in this section or associated with the subject matter provided as background should not be assumed to have been previously recognized in the prior art.

Autonomous robots have long been the stuff of science fiction fantasy. One technical challenge in realizing the truly autonomous robot is the need for the robot to be able to identify where they are, where they have been, and where they plan on going. Traditional SLAM techniques have improved greatly in recent years; however, there remains considerable technical challenge to providing fast accurate and reliable positional awareness to robots and self-guiding mobile platforms.

With the recent proliferation of virtual reality headsets such as the Oculus Rift™, PlayStation™ VR, Samsung Gear™VR, the HTC Vive™, and others, a new class of devices - one that is not autonomous but rather worn by a human user - that would benefit from fast, accurate and reliable positional information has arisen. Many technical challenges remain however in the field of enabling machines and devices to identify where they are, where they have been and plan where they are going. On especially challenging area involves recognizing a location and obstructions accurately and quickly. A variety of different approaches have been tried. For example RFID/WiFi approaches have proven to be expensive and of limited accuracy. Depth sensor based approaches have been found to be high cost and suffer from power drain and interference issues. Marker based approaches require markers placed within the work area - limiting the useful area in which the device can operate. Visual approaches currently are slow leading to failure when used in fast motion applications. Such approaches can also suffer scale ambiguity. Yet these implementations failed to live up to the standards required for widespread adoption.

US 2016/209217 A1 relates to systems that use visual sensors and dead reckoning sensors to process Simultaneous Localization and Mapping (SLAM). The systems adapt the concepts of graph theory and employ a processor that is configured to generate a graph with a plurality of pose nodes and a plurality of edges.

The challenge of providing fast reliable affordable positional awareness to devices heretofore remained largely unsolved.

## BRIEF DESCRIPTION OF THE DRAWINGS

In the drawings, like reference characters generally refer to like parts throughout the different views. Also, the drawings are not necessarily to scale, with an emphasis instead generally being placed upon illustrating the principles of the technology disclosed. In the following description, various implementations of the technology disclosed are described with reference to the following drawings, in which:

**FIG. 1** illustrates an example of a control unit for a visual-inertial sensor.

**FIG. 2** illustrates an example of an imaging component in **FIG. 1.**

**FIG. 3** illustrates a method of operation of the feature buffer in **FIG. 1.**

**FIG. 4** illustrates an example of an inertial component in **FIG. 1.**

**FIG. 5** illustrates an example of a visual-inertial sensor in which techniques described herein can be embodied.

**FIG. 6** is a representative method of a motion detection processor in one implementation.

**FIG. 7** illustrates an example of a visual-inertial sensory system.

**FIG. 8** illustrates an example tracking system implementing the tracking process.

**FIG. 9** is a representative method of updating a position of a mobile unit that includes cameras with distance calculation and multi-axis inertial measuring unit (IMU).

**FIG. 10** illustrates an example set of time dependent tracking states.

**FIG. 11** is a representative method of updating a position of a mobile unit that includes cameras with distance calculation, multi-axis inertial measuring unit (IMU), and a set of time dependent tracking states.

**FIG. 12A** illustrates an example relocalization process for a tracking system implementing the tracking process.

**FIG. 12B** illustrates an example of a relocalization search strategy selection process in one implementation.

**FIG. 13** illustrates an example of an occupancy grid map in one implementation, which does not fall under the claimed invention.

**FIG. 14** is a representative method of refining 3D points and poses of keyrigs in a point cloud to guide a mobile device that includes cameras with distance calculation and multi-axis inertial measuring unit (IMU).

**FIG. 15** illustrates an example of reprojection error.

**FIG. 16** illustrates an example robot guidance application in which one implementation that does not fall under the claimed invention can be embodied.

**FIG. 17** illustrates an example VR application in which one implementation can be embodied.

**FIG. 18** illustrates an example AR application in which one implementation can be embodied.

**FIG. 19** is a representative method of guiding a mobile device using information from cameras with distance calculation and multi-axis inertial measuring unit (IMU).

**FIG. 20** is a representative method of using a hybrid point grid to guide a mobile device that includes cameras with distance calculation and multi-axis inertial measuring unit (IMU).

## DESCRIPTION

The following detailed description is made with reference to the figures. Sample implementations are described to illustrate the technology disclosed, not to limit its scope, which is defined by the claims.

This document describes positional awareness techniques employing visual-inertial sensory data gathering and analysis hardware with reference to specific example implementations. The discussion is organized as follows. First, an introduction describing some of the problems addressed by various implementations will be presented. Then, a high-level description of one implementation will be discussed at an architectural level. Next, the processes used by some implementations to efficiently process image and inertial data are discussed. Lastly, the technology disclosed will be illustrated with reference to particular applications of (i) robots and self-guided autonomous platforms, (ii) virtual reality headsets and wearable devices, and (iii) augmented reality headsets and wearable devices. The references to specific examples are intended to be illustrative of the approaches disclosed herein rather than limiting.

Improvements in the use of sensors, techniques and hardware design can enable specific implementations to provide improved speed and accuracy, however, such improvements come with an increased number of parameters and significant memory and computational requirements. Conventional approaches to automatic guidance have largely focused on single sensor input. Camera based approaches have been relatively accurate, but suffer speed limitations (most hardware provide 30 fps, 60 fps at most), and are computationally expensive since these approaches process every pixel. Inertial guidance based approaches suffer from drift of the zero or origin point. Further, these approaches require expensive hardware in order to achieve useful results. WIFI and RFID approaches based on older technology exist; however, these have shown themselves to be limited in capability. Depth sensor based approaches are expensive. Furthermore, these approaches require active sensing, so the computational cost is relatively high. Finally, the device's active sensing can pose interference issues.

To overcome the computational burden of processing large amounts of image data all the time, inertial data from a multi-axis inertial measurement unit (IMU) can be used to estimate changes in the environment due to changes in pose of the machine under guidance. A multi-axis inertial measurement unit measures and reports the machine's linear acceleration using one or more accelerometers and rotational rate using one or more gyroscopes. To overcome the drift problems associated with inertial sensors, images can be captured and processed to correct and update pose estimates made based upon inertial data. However, the machine under guidance can have unsuccessful image updates due to hardware or software malfunctions of the cameras, blurred image due to sudden movement of the machine, obstruction of view, low illumination of the surrounding environment, etc. In instances where the machine under guidance has unsuccessful image updates, inertial data can be used to estimate the change in pose. In some implementations, the machine under guidance can also estimate its current pose by keeping a window of past readings of visual data, inertial data and tracking poses. In some implementations, to overcome the drift problems associated with inertial sensors, a motion detector is used to decide whether the machine under guidance has moved to a new location and whether the inertial data can be used to estimate the change in pose.

Further, stereo imaging sensors comprised of RGB and grayscale camera combinations can provide stereo imaging capabilities, at lower cost points than stereo RGB systems. Yet further, using low-end sensors to construct a sensor, e.g., cameras having resolution of 640X480, obviates the cost of high-end image sensors. Still further, use of a low-power Control Unit to perform certain sensor based processing, instead of a powerful processor of a host or the machine under guidance, enables use of the system at reduced cost relative to conventional approaches. Implementations can be deployed in a variety of usage scenarios, including robot or other mobile platform guidance, Virtual Reality/Augmented Reality (VR/AR) headsets, goggles or other wearable devices, and others.

Examples of robot applications that benefit from employing positional awareness techniques such as described herein include:

- Caregiver and service robots (traveling on a ground plane).
- A robot vacuuming/mopping/cleaning the floor.

- A robot being commanded to carry objects around the environment.
- A telepresence robot moving around a remote environment automatically.
- A robot butler that follows a person around.

In each of the scenarios listed above, the robot utilizes the techniques described herein in order to track its own location and to recognize the objects that it encounters. Also, since the robot performs many complex tasks, each with real-time constraints, it is beneficial that the sensing be done rapidly to accelerate the perception pipeline. To overcome the computational burden imposed by this processing, implementations offload some computation from the main processor to the visual-inertial sensor module. In addition, since it is a mobile robot, which carries limited battery, energy consumption is a major challenge. Accordingly, some implementations offload some computational tasks from the main processor to a low-power sensor module, thereby enabling implementations to achieve overall energy efficiency. Since cost is an issue in mobile robots, because lowering the cost of the robot makes the robot affordable to more customers, cost reduction is another factor for sensor design. Accordingly, some implementations employ one low-cost grayscale sensor that is used for localization tasks, and one colored sensor for recognition tasks. This design point enables these implementations to significantly reduce the cost over a stereo colored sensor designs without sacrificing performance.

Virtual Reality (VR) and Augmented Reality (AR) scenarios require a wearable headset to track its own location, and maybe to recognize the objects that it encounters. In order to track its location, the wearable headset is equipped with a positional self-aware device that senses its own movement through a stereo inertial hardware sensor. Accordingly, the sensor generates reliable inertial data so that the tracking and mapping pipeline that follows can accurately infer the device's - and hence the headset's - location.

In implementations in which the device is embedded within another device, e.g., robot, mobile platform, wearable computer, AR/VR headset, goggles, wrist or other watches, etc., limited computational resources are available, while the workload of robot guidance, or AR/VR processing demands real-time performance, sensing is done rapidly to accelerate the perception processing pipeline. Accordingly, some implementations achieve these goals by offloading some computation from the main processor to the sensor module.

In addition, in AR/VR applications the mobile embedded device carries limited battery power, making energy consumption a challenge. Accordingly, some implementations offload some computation from the main processor to the low-power sensor module, in order to achieve overall energy efficiency.

Yet further, cost is an issue in many AR/VR applications because as the cost of the device is lowered, the potential to reach more customers is expanded. Hence cost is another factor for the sensor module design. Accordingly, some implementations use one low-cost grayscale sensor for localization tasks, and one colored sensor for recognition tasks. This design can provide significantly reduced cost over a stereo colored sensor design without sacrificing performance.

Examples of systems, apparatus, and methods according to the disclosed implementations are described in a robot guidance, VR and AR wearable device contexts with image and inertial data. In other instances, the technology disclosed can be applied to autonomous vehicle guidance technology, navigation, telecommunications systems, financial systems, security trading, banking, business intelligence, marketing, mining, energy, etc. and using sonar, audio, and LIDAR data. Other services are possible, such that the following examples should not be taken as definitive or limiting either in scope, context, or setting.

The technology disclosed relates to improving utilization of computing resources such as computational power and memory use during processing of image and inertial data inside a single input-multiple data (SIMD) architecture. The technology disclosed can be implemented in the context of any computer-implemented system including a reduced instruction set (RISC) system, emulated hardware environment, or the like. Moreover, this technology can be implemented using two or more separate and distinct computer-implemented systems that cooperate and communicate with one another. This technology can be implemented in numerous ways, including as a process, a method, an apparatus, a system, a device, a computer readable medium such as a computer readable storage medium that stores computer readable instructions or computer program code, or as a computer program product comprising a computer usable medium having a computer readable program code embodied therein.

The technology disclosed can be implemented in the context of any computer-implemented system like a NEON ARM VFP9-S processor, an ARM core processor, or a compatible processor implementation.

In addition, the technology disclosed can be implemented using a variety of different imaging sensors and technologies, including RGB, grayscale, binary (e.g., digital image subjected to threshold intensity level), IR, sonar, LIDAR or combinations thereof.

**System Overview**

**Stereo Visual-Inertial Sensor**

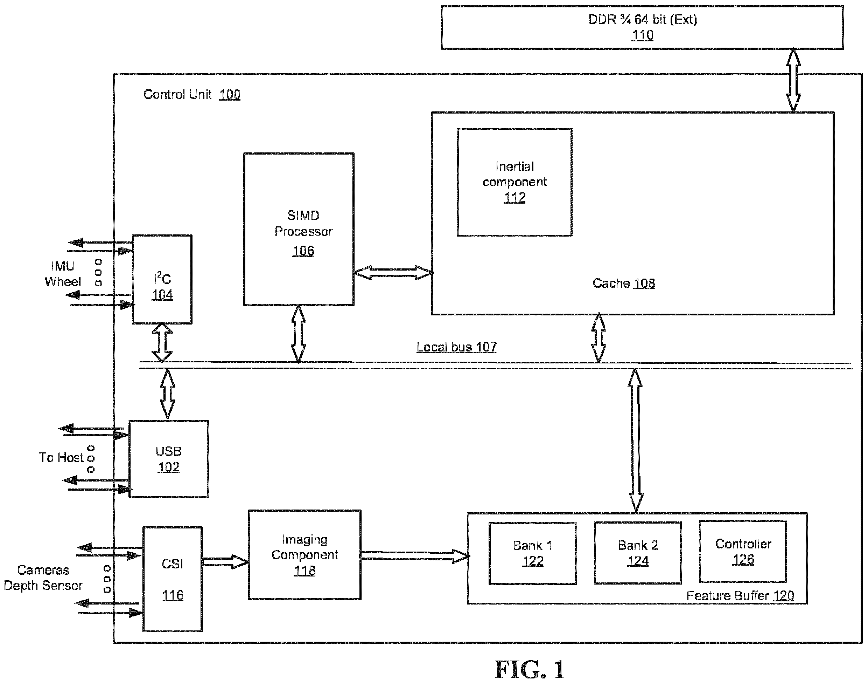

FIG. 1 illustrates an example of a Control Unit for a visual-inertial sensor in block diagram format. Control Unit **100** in **FIG. 1** can be coupled to an external memory **110**, a flash memory (not shown in **FIG. 1** for clarity sake), and one or more persistent storages such as HDDs, optical drives or the like (also not shown in **FIG. 1** for clarity sake). Control Unit **100** includes a memory cache **108**, a USB I/O port **102**, a Camera Serial Interface (CSI) I/O port **116**, that facilitates directly receiving images from cameras (not shown in FIG. 1 for clarity sake) by imaging component **118**, an Inter-Integrated Circuit (I2C) I/O ports **104**, a single instruction multiple-data (SIMD) capable processor **106**, and a feature buffer **120**. The components in the Control Unit **100** are intercoupled by a local bus **107**. In an embodiment, the external memory **110** is a 64-bit double data rate (DDR) random access memory (RAM). In an embodiment, the SIMD capable processor **106** is implemented as a reduced instruction set computer (RISC) architecture. In an embodiment, the SIMD capable processor **106** is implemented as a NEON ARM VFP9-S. An inertial component **112** resides within the memory cache **108**.

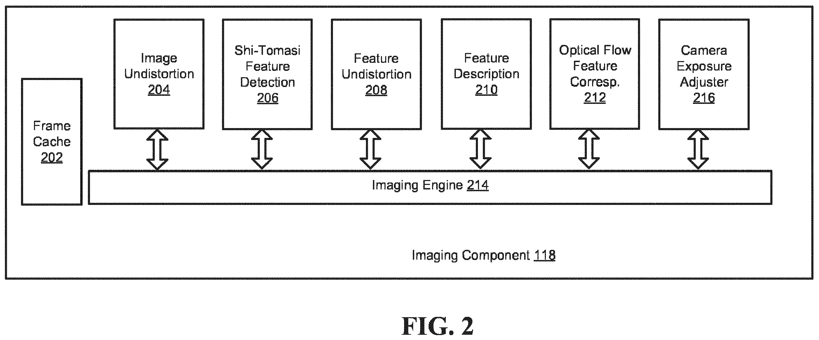

FIG. 2 illustrates an example of an imaging component **118** in **FIG. 1**. An Imaging component **118** includes a direct memory access (DMA) **202**, an image undistortion processor **204**, a Shi-Tomasi processor **206**, a feature undistortion processor **208**, a feature description engine **210**, an optical flow feature correspondence processor **212**, and a camera exposure adjuster **216** under control of an Imaging Engine **214**.

The camera exposure adjuster **216** dynamically adjusts the exposure value of the visual sensors. In one implementation, camera exposure adjuster **216** adjusts the exposure value when it discovers that the number of 2D features detected in an image is lower than a feature threshold. In one implementation, the feature threshold can be 50. In one implementation, the exposure value of the visual sensor can be adjusted by turning on the auto-exposure capability of the cameras. Of course, other implementations in which exposure value of the visual sensors can be adjusted will be readily apparent to those skilled in the art.

If each incoming image from the visual sensors or cameras through Camera Serial Interface (CSI) I/O port **116** is at least 3 MB and 30 images per second are captured, then there is at least 90 MB of memory allocation per second for the incoming images. To process the rather large amount of visual data with a short period of time, frames captured by the camera in the visual-inertial sensor can be directly processed by the imaging component **118** to extract useful corner features and generates a descriptor for each feature. Imaging component **118** can be implemented as a Digital Signal Processor (DSP). The imaging component **118** directly processes the incoming images without involving the SIMD processor **106** or storing the image data in the cache **108**. In some implementations, the incoming image size is at least 2MB. In some implementations, the incoming image size is at least 1MB. In some implementations, the images may be arriving at the rate of 20 images per second through the Camera Serial Interface (CSI) I/O port.

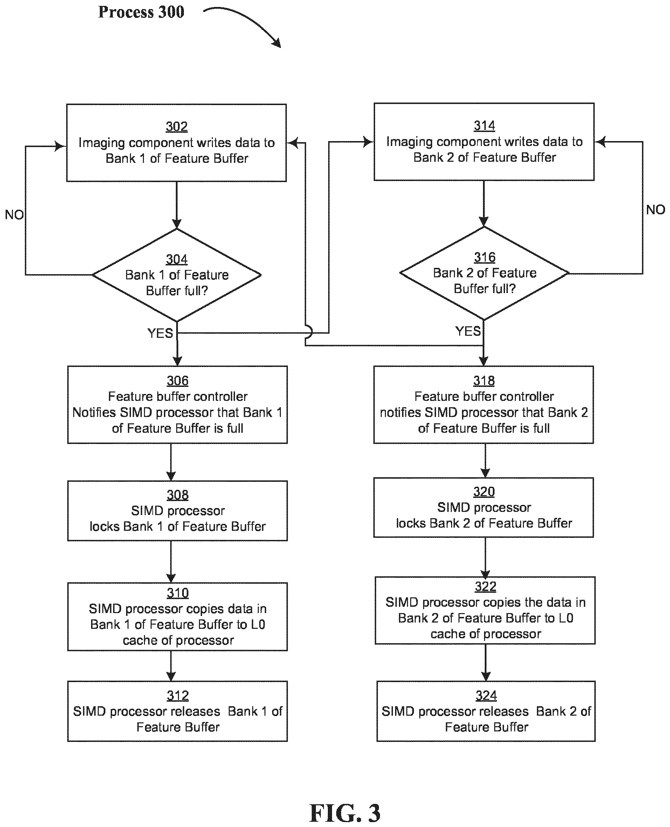

After the incoming images are analyzed and key features are extracted by the imaging component **118**, a feature buffer **120** stores the extracted features. In some implementations, the feature buffer includes banks to contain 2-5 KB of feature data per image frame. In some implementations, the feature buffer includes banks to contain 1-10 KB of feature data per image frame. The feature buffer **120** comprises of bank 1 **122**, bank 2 **124** and a feature buffer controller **126**. FIG. 3 illustrates a method of operation **300** of the feature buffer **120**. The imaging component **118** can write data to either bank 1 (action **302**) or bank 2 (action **314**), but not concurrently. If the imaging component **118** is currently writing data to bank 1 and bank 1 becomes full (action **304**), the feature buffer controller **126** notifies the SIMD processor **106** (action **306**) that bank 1 is full. Meanwhile, the imaging component **118** starts writing data to bank 2 (action **314**). The SIMD processor locks bank 1 (action **308**), copies the data in bank 1 to the L0 cache available inside the SIMD processor (action **310**), and releases bank 1 (action **312**). If bank 2 becomes full (action **316**), the feature buffer controller **126** notifies the SIMD processor **106** about the filled bank 2 (action **318**), and the imaging component **118** starts writing data to bank 1 (action **302**). The SIMD processor locks bank 2 (action **320**), copies the data in bank 2 to the L0 cache available inside the SIMD processor (action **322**), and releases bank 2 (action **324**). Of course other implementations in which additional banks are employed will be readily apparent to those skilled in the art.

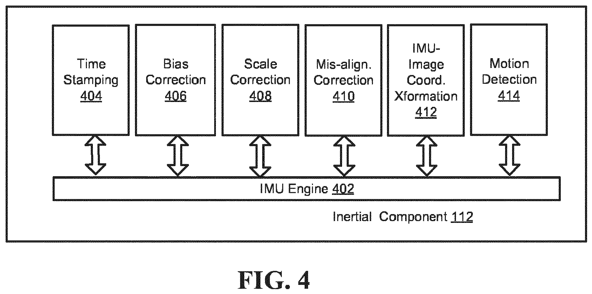

FIG. 4 illustrates an example of an inertial component **112** in **FIG. 1**. The Inertial component **112** includes an Inertial Measurement engine **402** that implements a time stamping processor **404** that time stamps sets of inertial data from an inertial sensor (not shown in FIG. 1 for clarity sake), a bias correction processor **406** that corrects data readout from the timestamped inertial data, a scale correction processor **408** that applies stored scale factor information to the corrected inertial data, a mis-alignment correction processor **410** that corrects misalignments of sensory elements of the inertial measurement sensor, and an IMU-Image coordinate transformation processor **412** that computes transformations describing differences between a frame of reference of the inertial data and a frame of reference of the image data. In some implementations, the inertial component **112** can further include a motion detection processor **414** that maintains a window of readings from the accelerometer of the inertial measurement unit, and computes the variances of the accelerometer readings. The motion detector **414** determines whether the mobile device is "moving" or "static" according to the computed variances from the accelerometer readings.

**Visual-inertial sensor**

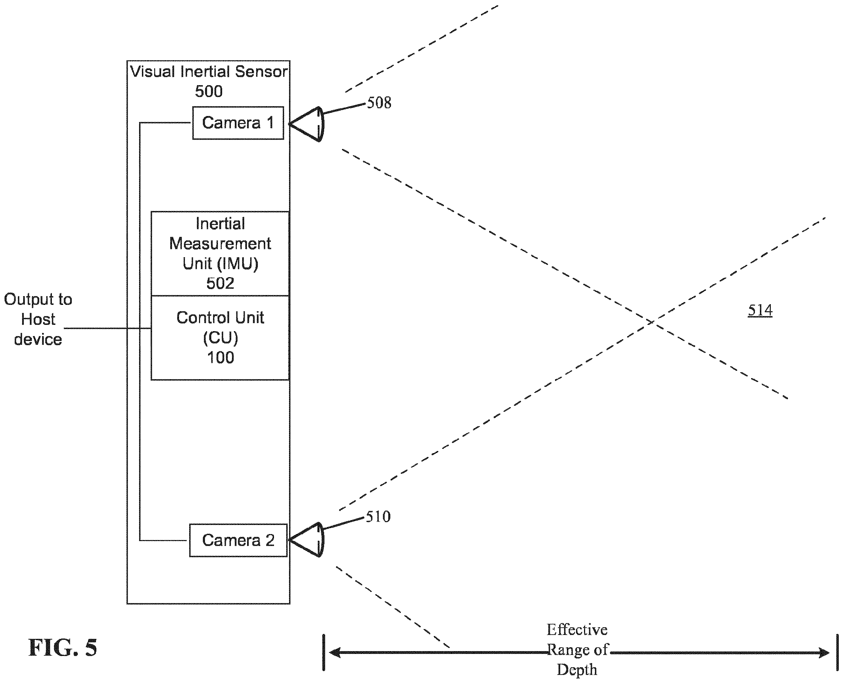

FIG. 5 illustrates an example visual-inertial sensor implementation configured for determining positional information. Visual-inertial sensor **500** includes camera 1 **508,** camera 2 **510,** an Inertial Measurement Unit (IMU) **502,** and a Computation Unit (CU) **100,** having a USB interface to provide output to a host. Cameras **508, 510** include at least partially overlapping fields of view to provide a stereoscopic capable portion **514** within an effective range of depth of view of the visual-inertial sensor **500.** Using cameras **508, 510,** enables visual-inertial sensor **500** to generate image depth information, which is useful for agent localization tasks (including tracking, localization, map generation, and relocalization). In a representative implementation illustrated by **FIG. 5,** cameras **508** and **510** are used mainly for agent localization that extracts features from images and to provide a plurality of functions: firstly, to extract features from images in agent localization, and secondly, to provide raw information for deep learning based tasks, including object recognition, object tracking, image captioning, and the like.

An IMU **502** provides raw sensor data for agent localization pipeline, which consumes IMU data at a high frequency (> 200 Hz) to generate agent positional information in real-time. In an implementation, the localization pipeline combines information from IMU **502** which runs at relatively high frequency to provide frequent updates of less accurate information, and, which run at relatively lower frequency, 30 Hz, to provide more accurate information with less frequency.

The Control Unit **100** performs control of the sensors, IMU **502** and cameras **508, 510,** time stamping sensor data from the sensors, performs pre-computation in order to accelerate the localization pipeline, and packages raw data for sending over USB **102** to a host.

The USB interface **102** enables the visual-inertial sensor **500** to interact with a host. The host (not shown in **FIG. 5** for clarity sake) can be a mobile device or a desktop/laptop computer, specialized machine controller, automobile control module, robot controller or the like, that consumes the data generated by the visual-inertial sensor **500.** In various implementations, the host can perform additional computation to achieve agent localization and deep learning tasks. Implementations that perform data pre-processing on low-power CU **100** relieve the host processor (which has a much higher power consumption compared to low-power CU) from performing these tasks. As a result, such implementations achieve increased energy efficiency.

Note that one implementation averages the aligned images. In other implementations, other techniques are used. Also note that in another implementation an image quality measurement sub-step is included. So if the output image is too dark or still not sharp or clear enough, the image will be rejected and not passed to the rest of the pipeline.

**Sensor Inertial Data Generation and Processing**

In an embodiment, IMU raw data is corrected on the CU **100,** thereby enabling implementations that do not require extra processing from the host processor, therefore accelerating the sensor pre-processing pipeline.

Time Stamping:

The time stamping processor **404** time stamps each set of inertial measurement data that the control unit **100** receives from the IMU sensor **502** data, in order to assure that the visual-inertial sensor **500** maintains a temporally accurate stream of sensor data. Such rigorous attention to maintaining the integrity of the sensor data stream enables implementations to provide agent localization that works reliably. Time-stamping raw data by the visual-inertial sensor obviates the need for complex synchronization tasks. The time stamping processor **404** is further configured for performing time synchronization with the host processor of the mobile unit, which may have a different clock than the control unit **100.** The time stamping processor **404** also accounts for data transfer delay between the IMU **502,** the control unit **100,** cameras **508,510,** and the host processor of the mobile unit. The discrepancy in time stamps for the of inertial measurement data due to different clocks and data transfer delay is corrected by the time stamping processor **404** by adding a constant offset or adjusting for the transfer delay.

Bias Correction:

The bias correction processor **406** corrects IMU data readout from the timestamped inertial data. Due to manufacturing imperfections, IMU sensors usually have bias problems such that its measurements contain errors. A bias error, if not removed from the measurement, is integrated twice as part of the mechanization process. In this case, a constant bias (error) in acceleration becomes a linear error in velocity and a quadratic error in position. A constant bias in attitude rate (gyro) becomes a quadratic error in velocity and a cubic error in position. The bias can be derived from the offline factory sensor calibration stage. This calibration information in CU **100** to perform bias correction task on CU **100.**

Scale Correction:

The scale correction processor **408** applies stored scale factor information to the corrected inertial data. Scale factor error is the relation between input and output. If the input is 100%, the expected output is 100%. The actual output is the result of a linear effect, where the output is proportional to the input but scaled. For example, if the input is 10 m/s2, but there is a 2% scale factor error, the output measurement is 10.2 m/s2. The scale factor can be derived from the offline factory sensor calibration stage. This calibration information in CU **100** to perform scale correction task on CU **100**.

Misalignment Correction:

The mis-alignment correction processor **410** corrects misalignments of sensory elements of the inertial measurement sensor. There are three gyroscopes and three accelerometers are mounted orthogonal to each other. The mountings, however, have errors and so are not perfectly 90 degrees. This leads to a correlation between sensors. For example, assume one axis is pointed perfectly up and the IMU is level. The accelerometer on this axis is measuring gravity. If the other two axes were perfectly orthogonal, they do not measure any of the effect of gravity. If there is a non-orthogonality, the other axes also measure gravity, leading to a correlation in the measurements. The effect of non-orthogonality occurs within sensor sets (between accelerometers or gyroscopes), between sensor sets or between the sensor sets and the enclosure (package misalignment). Careful manufacturing, as well as factory calibration, can help minimize this error source. Continuous estimation and correction during system operation is also an approach used to minimize this effect. Package misalignment (between the IMU **502** and the enclosure) can be removed by performing a bore-sighting estimation to determine the offset between the IMU **502** measurement frame and the sensor (objective) frame. The misalignment numbers can be derived from the offline factory sensor calibration stage. This calibration information in CU **100** to perform misalignment correction task on CU **100.**

Movement Detection:

Accelerometers in a multi-axis IMU will be perturbed by some thermo-mechanical noise which fluctuates at a rate much greater than the sampling rate of the sensor. As a result, the inertial data readings obtained from the multi-axis IMU will include white noise. Therefore, inertial data from the IMU will predict that the mobile unit has traveled a significant distance even when it is static. The motion detection processor **414** maintains a window of time-dependent accelerometer readings from the IMU, and computes the time-dependent variance from the accelerometer readings. In one implementation, the motion detection processor **414** keeps a record of accelerometer readings for 0.5 to 1 second. Thus, for a 200 Hz IMU, the window size for the window of time-dependent accelerometer readings is 100 ~ 200 samples.

The motion detection processor **414** determines whether the mobile unit is "moving" or "static" according to the computed variance. If the variance is greater than a threshold, the mobile unit is said to be "moving." If the variance is smaller than a threshold, the mobile unit is said to be "static." In one implementation, the threshold variance can be determined by the heuristic evaluation by the system designer. If the motion detection processor **414** determines that the mobile unit is "moving," the new pose of the mobile unit can be estimated from the inertial data readings from the accelerometers of the IMU. In one implementation, if the motion detection processor **414** determines that the mobile unit is "static," the new pose of the mobile unit can be estimated by assuming zero velocity. In one implementation, if the motion detection processor **414** determines that the mobile unit is "static," a white noise can be added to the previous pose of the mobile unit to determine a new pose. In another implementation, if the motion detection processor **414** determines that the mobile unit is "static," the heading orientation of the mobile unit can be updated based on the gyroscope readings from the IMU.

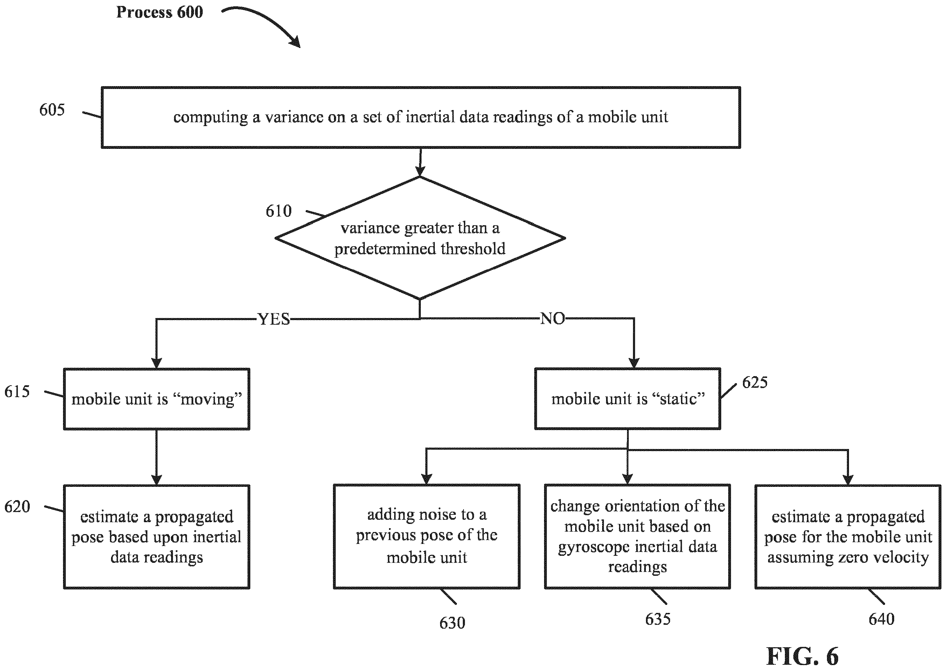

**FIG. 6** is a representative method **600** of motion detection processor **414** using information from a multi-axis inertial measuring unit (IMU). Flowchart **600** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 6.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

FIG. 6 includes process **600** that begins at action **605,** where the motion detection processor computes a variance for the set of accelerometer data readings from a window of time-dependent accelerometer readings from the IMU.

At action **610,** if the variance is greater than a threshold, the mobile unit is said to be "moving" (action **615**). At action **610,** if the variance is smaller than a threshold, the mobile unit is said to be "static" (action **625**).

If the motion detection processor determines that the mobile unit is "moving" (action **615**), a propagated pose of the mobile unit can be estimated from the inertial data readings from the IMU (action **620**).

If the motion detection processor determines that the mobile unit is "static" (action **625**), a propagated pose of the mobile unit can be estimated from can be estimated by assuming zero velocity (action **640**), adding a white noise to the previous pose of the mobile unit (action **630**), or updating the heading orientation of the mobile unit based on the gyroscope readings from the IMU (action **635**).

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

**Sensor Visual Data Generation and Processing**

Image Undistortion:

The image undistortion processor **204** corrects distortion in the image data in the captured frames. The image distortion is generally referred to an optical aberration that deforms and bends physically straight lines and makes them appear curvy in images. Optical distortion occurs as a result of optical design. In order to achieve reliable computer vision results, image undistortion processor **204** can un-distort the image before further processing is performed. This can be achieved by using a lookup table of the size of the input image, and performing a remapping operation to undistort the whole image.

Feature Undistortion:

In cases when the remaining portions of the processing pipeline do not require the whole image, but only the feature points within the image, the feature undistortion processor **208** perform a feature undistortion operation on the CU. In detail, this operation runs after the feature extraction stage, and undistorts each feature point.

Feature Detection:

The Shi-Tomasi processor **206** performs feature detection upon image frames. Features are "interesting" parts of an image. The Shi-Tomasi feature detection includes methods that aim at computing abstractions of image information and making local decisions at every image point whether there is an image feature of a given type at that point or not. The resulting features will be subsets of the image domain, often in the form of isolated points. Some implementations perform the feature detection on the CU **100** to relieve the host from performing such tasks, and to accelerate the feature detection process. Accordingly, in an implementation, processing includes:

- Action 1: calculate Eigen value for each pixel and determine (i) whether the feature is of interest; and (ii) for features of interest, a type of feature:

  ◦ two small Eigen values: feature is not interesting
  ◦ one small, one big value: feature is likely an edge
  ◦ two big values: feature is likely a corner
  ◦ other type of features

- Action 2: refine

  ◦ Apply non-maximum suppression
  ◦ Apply spatial binning
  ◦ Apply heuristics
  ◦ Apply other types of refinement

Feature Description:

The feature description engine **210** performs feature description on detected features. The feature description includes methods to uniquely identify each detected points in an image. Feature description can be used to compare and match feature points between different images. Some implementations perform the feature description on the CU **100** to relieve the host from performing such tasks, and to accelerate the feature description process.

One implementation of feature description engine **210** uses a SIMD-accelerated ORB descriptor to describe features. The description of a feature can be used for matching purposes and describing a feature's uniqueness. The ORB descriptor approach was selected for its relative rotational invariance and immunity to Gaussian image noise. One example of an ORB feature detector and binary descriptor can be found at "ORB feature detector and binary descriptor", http://scikit-image.org/docs/dev/auto_examples/plot_orb.html (last accessed August 17, 2016). For further information on ORB Descriptor, reference may be had to Ethan Rublee, et al., "ORB: an efficient alternative to SIFT or SURF", which is incorporated herein by reference for all purposes.

2D Feature Correspondence Generation:

The optical flow feature correspondence processor **212** performs 2D feature correspondence generation for the features.

Once feature correspondence is identified for any two 2D feature points, triangulation can be applied to the feature points to derive the depth of the point in space. This depth information is employed by processes later in the localization pipeline. Some implementations perform the feature correspondence generation on the CU **100** to relieve the host from performing such tasks, and to accelerate the feature correspondence generation.

One optical flow feature correspondence processor **212** implementation employs optical flow methods to match and link 2D features between two image frames, taken at times t and t+Δt at each voxel position. One such method, called a differential method, is based on local Taylor series approximations of the image signal, using partial derivatives with respect to the spatial and temporal coordinates. Accordingly, in an implementation, processing includes:

- Input: last image, current image, a list of detected feature locations from the last image,
- Output: a list of locations of the last image's detected features' in the current image
- Assumption: brightness consistency, image changes by and only by motion
- Action 1: predict the output locations by either just assuming there is no motion so the current locations are the same as last frame's feature locations, OR use inertial information retrieved from an IMU to predict the locations.
- Action 2: refine the pixel coordinate for each feature point by searching around the predicted location, matching patches, and using matching score to determine the refined position. Accordingly, the technology disclosed can provide implementations with the ability to gain increased performance by using inertial information from the IMU to narrow the search and save time.

Another implementation of feature correspondence processor **212** employs spatial-temporal methods to match and link 2D features between more than one image frames, captured from different camera at different time stamps. A set of 2D features can be matched and included in a link if they can be observed from different viewpoints, i.e. different timestamps and/or different cameras.

Accordingly, in an implementation, processing includes:

- Input: images captured by different cameras and at different time steps, a list of detected feature locations from the images,
- Assumption: brightness consistency, image changes by and only by motion
- Action 1, Temporal linking: Match and link 2D features detected from images captured from the same camera and with consecutive time stamps. The matching 2D features are located close to each other between images (i.e. location within ~ 20 pixels) and have similar feature descriptors.
- Action 2, Spatial linking to existing links: For each camera, (i) Collect a set of features that have not been matched to any existing links (i.e. features that are left out from "Temporal matching" from Action 1); (ii) Also collect a set of links that are available to be connected to 2D features from the selected camera. A link is available when it does not currently contain a 2D feature from the selected camera; (iii) Calculate the similarity between each 2D feature and each available link. The similarity between a feature and a link is the best similarity score between the descriptor of the feature and the descriptors of the features in the link. If the similarity score is less than a threshold, it is not possible to add the feature to the link; (iv) Sort the candidate matches between the 2D features and the links according to their similarity score; (v) Match the 2D feature to the link following the sorted similarity score. Once a 2D feature or a link is matched, any candidate matches with that particular 2D feature or that particular link are removed from the set of features that have not been matched and the set of links that are available to be connected; and (vi) Repeat (v) until no new matches are established.

- Action 3, Create new links: : For each camera, (i) Collect the set of 2D features that have not been matched to any existing links (i.e. features that are left out from both "Temporal linking" from Action 1 and "Spatial linking to existing links" from Action 2); (ii) Calculate the similarity between a pair of 2D features. If the similarity is less than a threshold, it is not possible to match the pair of 2D features; (iii) Sort the candidate matches according to their similarity; (iv) Create a link from each match following the sorter similarity order. Once a 2D feature point is matched, any candidate matches with that 2D feature is removed from the set of features that have not been matched and the set of links that are available to be connected.

In one implementation, the similarity of the descriptors between two 2D features may be recorded in a look-up table in memory for efficiency. In one implementation, to reduce outliers from spatial matching, two 2D features are allowed to be matched when their locations is within X pixels (~20 pixel) in vertical direction if the cameras are aligned horizontally. In another implementation, to reduce outliers from spatial matching, two 2D features are allowed to be matched when their locations is within Y pixels (~20 pixel) in horizontal direction if the cameras are aligned vertically.

IMU-Camera Coordinate Transformation:

In some implementations, the IMU **502** and the cameras **508, 510** do not reside at the same physical location; there is a distance between the IMU **502** and the cameras **508, 510.** Accordingly, in order to enable later processes in the localization pipeline to treat the IMU **502** and the cameras **508, 510** as being co-located, on implementation determines a transformation matrix between the IMU **502** and the cameras **508, 510,** which can be achieved from an offline production or post-production calibration stage. In CU **100,** this transformation matrix is stored locally, and applied to the IMU data. This technique enables later processes to be able to treat the IMU **502** and the cameras **508, 510** to be co- located.

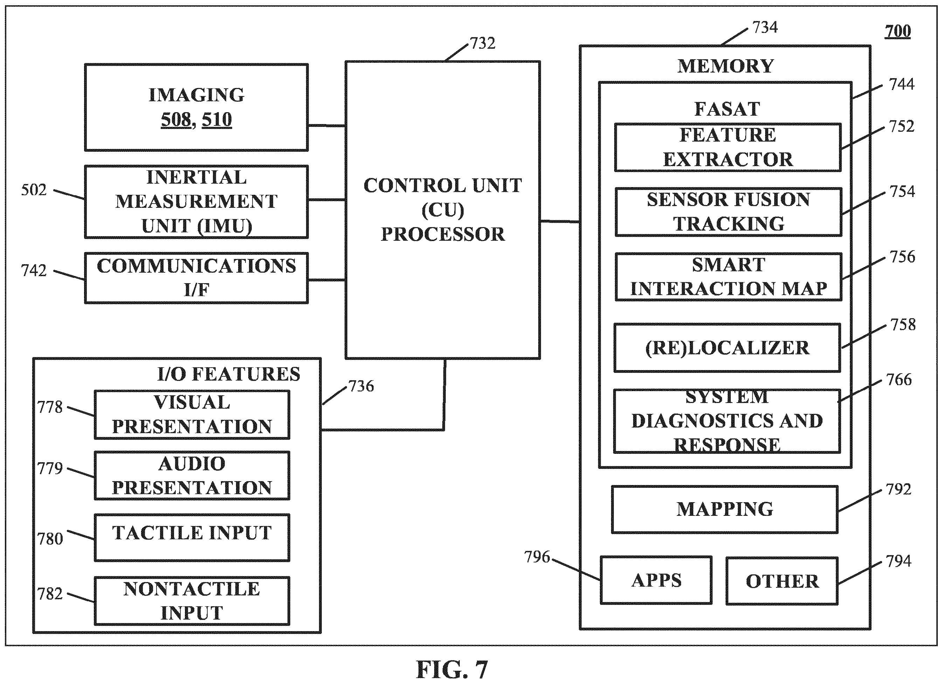

Referring now to **FIG. 7,** which shows a simplified block diagram of a visual-inertial positioning system **700** implementing visual-inertial sensor **500.** Visual inertial positioning system **700** includes a processor **732,** a memory **734,** an inertial measurement unit IMU **502** and one or more cameras **508** and **510,** and a communications interface **742.** One or more additional I/O features **736** are included to address implementation specific needs, such as a visual presentation interface **778,** an audio presentation interface **779,** sensor(s) for detecting tactile input (e.g., keyboards, keypads, touchpads, mouse, trackball, joystick and the like) **780** and non-tactile input (e.g., microphone(s), sonar sensors and the like) **782.** Memory **734** can be used to store instructions to be executed by processor **732** as well as input and/or output data associated with execution of the instructions. In particular, memory **734** contains instructions, conceptually illustrated as a group of modules described in greater detail below, that control the operation of processor **732** and its interaction with the other hardware components. An operating system directs the execution of low-level, basic system functions such as memory allocation, file management and operation of mass storage devices. The operating system may be or include a variety of operating systems such as Microsoft WINDOWS operating system, the Unix operating system, the Linux operating system, the Xenix operating system, the IBM AIX operating system, the Hewlett Packard UX operating system, the Novell NETWARE operating system, the Sun Microsystems SOLARIS operating system, the OS/2 operating system, the BeOS operating system, the MACINTOSH operating system, the APACHE operating system, an OPENACTION operating system, iOS, Android or other mobile operating systems, or another operating system of platform.

The computing environment may also include other removable/non-removable, volatile/nonvolatile computer storage media. For example, a hard disk drive may read or write to non-removable, nonvolatile magnetic media. A magnetic disk drive may read from or write to a removable, nonvolatile magnetic disk, and an optical disk drive may read from or write to a removable, nonvolatile optical disk such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The storage media are typically connected to the system bus through a removable or non-removable memory interface.

In an embodiment, the processor **732** is a NEON ARM processor implementing a single input-multiple data (SIMD) architecture as a reduced instruction set computer (RISC) architecture. Depending on implementation, however, processor **732** can alternatively be a realized using a specific purpose microcontroller, peripheral integrated circuit element, a CSIC (customer-specific integrated circuit), an ASIC (application-specific integrated circuit), a logic circuit, a digital signal processor, a programmable logic device such as an FPGA (field-programmable gate array), a PLD (programmable logic device), a PLA (programmable logic array), an RFID processor, smart chip, or any other device or arrangement of devices that are capable of implementing the actions of the processes of the technology disclosed.

Communications interface **742** can include hardware and/or software that enables communication between visual inertial positioning system **700** and other systems controlling or enabling customer hardware and applications (hereinafter, a "host system" or "host") such as for example, a robot or other guided mobile platform, an autonomous vehicle, a virtual reality-augmented reality wearable device (VR/AR headset) or the like (not shown in **FIG. 7** for clarity sake). Cameras **508, 510, as** well as sensors such as IMU **502** can be coupled to processor **732** via a variety of communications interfaces and protocols implemented by hardware and software combinations. Thus, for example, positioning system **700** can include one or more camera data ports and/or motion detector ports (not shown in **FIG. 7** for clarity sake) to which the cameras and motion detectors can be connected (via conventional plugs and jacks), as well as hardware and/or software signal processors to modify data signals received from the cameras and motion detectors (*e.g.,* to reduce noise or reformat data) prior to providing the signals as inputs to a fast accurate stable adaptive tracking ("FASAT") process **744** executing on processor **732.** In some implementations, visual-inertial positioning system **700** can also transmit signals to the cameras and sensors, *e.g.,* to activate or deactivate them, to control camera settings (frame rate, image quality, sensitivity, etc.), to control sensor settings (calibration, sensitivity levels, etc.), or the like. Such signals can be transmitted, *e.g.,* in response to control signals from processor **732,** which may in turn be generated in response to user input or other detected events.

Instructions defining FASAT process **744** are stored in memory **734,** and these instructions, when executed, perform analysis on image frames captured by the cameras **508, 510** and inertial data captured by the IMU **502** connected to visual inertial positioning system **700.** In one implementation, FASAT process **744** includes various logical processes, such as a feature extractor **752** that receives a raw image and determines a salient points' representation of objects in the image thereby representing the geometry understanding of the objects from a machine's perspective view. In some implementations, feature extractor **752** analyzes images (*e.g.,* image frames captured via cameras **508,510**) to detect edges of an object therein and/or other information about the object's location. A sensor fusion tracking process **754** uses feature extraction results and inertial data from IMU **502** to generate pose accurately and rapidly. A smart interaction map **756** enables using a known map of obstructions to localize the sensor **500.** The map is built using mapping functionality of mapping process **792,** which is described in further detail herein below. A Re-localizer process **758** recovers device positional awareness when the device has lost track of device position. A system diagnostic and response (SDAR) **766** manages of current localizing state of the device and provide response strategy.

A mapping process **792** generates a hybrid occupancy grid that maps the space and objects recognized by the feature extractor **752.** The hybrid occupancy grid includes (i) a point cloud representation of points in space located in the image frames and (ii) one or more x-y plane occupancy grids arranged at heights to intersect points on the extracted features.

In some implementations, other processing **794** analyzes audio or ultrasonic signals (e.g., audio signals captured via sonar or audio sensors comprising non-tactile input **782**) to localize objects and obstructions by, for example, time distance of arrival, multilateration or the like. ("multilateration is a navigation technique based on the measurement of the difference in distance to two or more stations at known locations that broadcast signals at known times. See Wikipedia, at <http://en.wikipedia.org/w/index.php?title=Multilateration&oldid=523281858>, on Nov. 16, 2012, 06:07 UTC). Audio signals place the object on a known surface, and the strength and variation of the signals can be used to detect object's presence. If both audio and image information is simultaneously available, both types of information can be analyzed and reconciled to produce a more detailed and/or accurate path analysis.

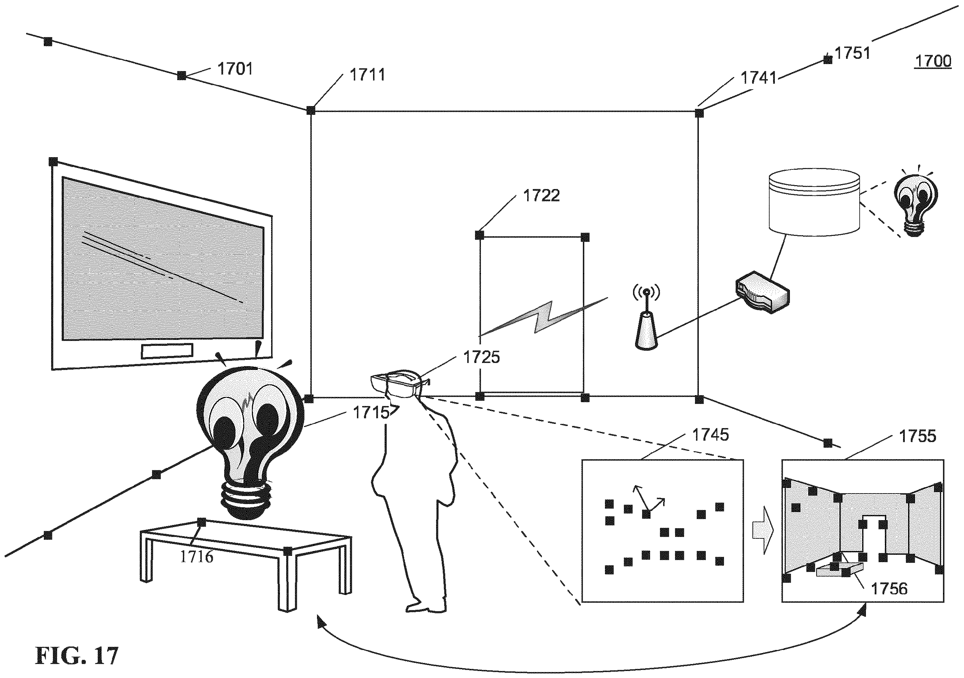

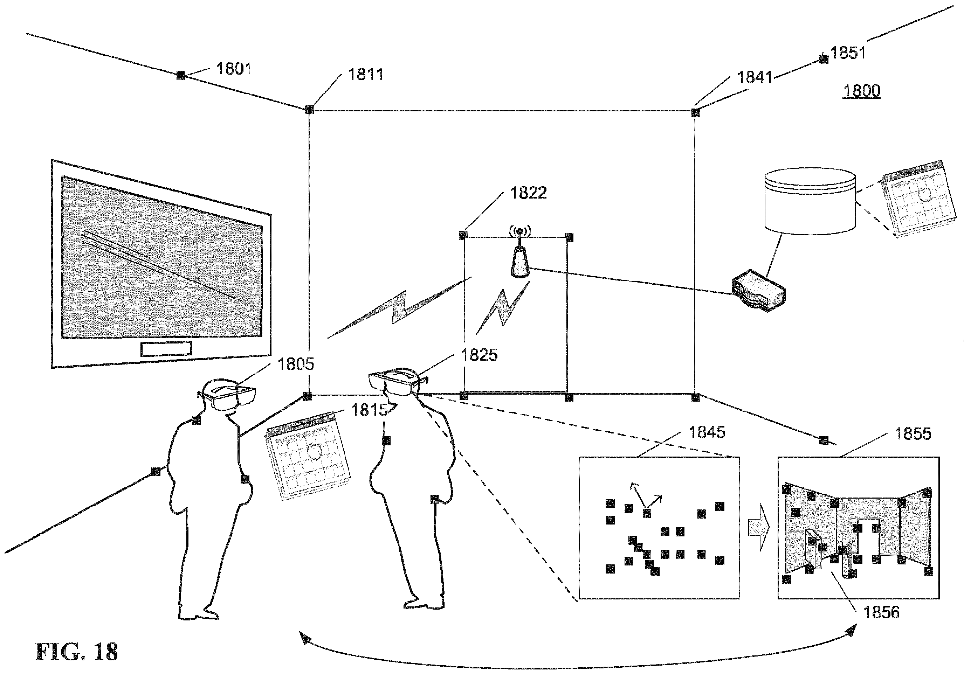

In some implementations, other processing **794** determines paths to track and predict device movements in space based upon the hybrid occupancy grid generated by mapping process **792.** Some implementations **794** includes an augmented reality (AR)/virtual reality (VR) environment that provides integration of virtual objects reflecting real objects (*e.g.,* virtual presence of friend **1715** in **FIG. 17**) as well as synthesized objects **1815** in **FIG. 18** for presentation to user of device **1725** in **FIG. 17** via presentation interface **778** to provide a personal virtual experience. One or more applications **796** can be loaded into memory **734** (or otherwise made available to processor **732**) to augment or customize functioning of device **500** thereby enabling the system **700** to function as a platform. Successive camera images are analyzed at the pixel level to extract object movements and velocities. In some implementations, presentation interface **778** includes a video feed integrator provides integration of live video feed from the cameras **508, 510** and one or more virtual objects. Video feed integrator governs processing of video information from disparate types of cameras **508, 510.** For example, information received from pixels that provide monochromatic imaging and from pixels that provide color imaging (*e.g.,* RGB) can be separated by integrator and processed differently. Image information from visual sensors can be used mainly for agent localization that extracts features from images and provide a plurality of functions: firstly, to extract features from images in agent localization (similar to the usage of grayscale camera), and secondly, to provide raw information for deep learning based tasks, including object recognition, object tracking, image captioning, and the like. Information from one type of sensor can be used to enhance, correct, and/or corroborate information from another type of sensor. Information from one type of sensor can be favored in some types of situational or environmental conditions (*e.g.,* low light, fog, bright light, and so forth). The device can select between providing presentation output based upon one or the other types of image information, either automatically or by receiving a selection from the user. An imaging integrator can be used in conjunction with AR/VR environment control the creation of the environment presented to the user via presentation interface **778.**

Presentation interface **778,** audio presentation **779,** non-tactile input **782,** and communications interface **742** can be used to facilitate user interaction via device **500** with Visual inertial positioning system **700.** These components can be of highly customized design, generally conventional design or combinations thereof as desired to provide any type of user interaction. In some implementations, results of analyzing captured images using inertial measuring unit **502** and cameras **508, 510** and FASAT program **752** can be interpreted as representing objects and obstacles in 3D space. For example, a robot equipped with visual-inertial sensor **500** can perform path planning and/or obstacle avoidance across a surface that has been analyzed using FASAT program **752,** and the results of this analysis can be interpreted as an occupancy map by some other program executing on processor **732** (*e.g.,* a motion planner, localization and tracking process, or other application). Thus, by way of illustration, a robot might use sweeping of cameras **508, 510** across a room in order to "map" a space currently imaged to a hybrid point grid that can be used by a host device such as a monitor, VR headset or the like via presentation interface **778,** to provide visual input of the area that the robot is "seeing". Smart interaction map **756** may use the representation of space built by mapping **792** to plan a path for a robot or mobile platform through the space, *e.g.,* to improve localization and tracking of the robot or platform through the space.

It will be appreciated that Visual-inertial positioning system **700** is illustrative and that variations and modifications are possible. Visual inertial positioning systems can be implemented in a variety of form factors, including "cloud" computing systems of servers and networks, desktop systems, laptop systems, tablets, smart phones or personal digital assistants, and so on. A particular implementation may include other functionality not described herein for clarity sake. In some implementations, one or more cameras and two or more microphones may be built into the visual-inertial system **700** or may be supplied as separate components. Further, an image or audio analyzer can be implemented using only a subset of Visual inertial positioning system **700** components (*e.g*., as a processor executing program code, an ASIC, or a fixed-function digital signal processor, with suitable I/O interfaces to receive image data and output analysis results).

While Visual inertial positioning system **700** is described herein with reference to particular blocks, it is to be understood that the blocks are defined for convenience of description and are not intended to imply a particular physical arrangement of component parts. Further, the blocks need not correspond to physically distinct components. To the extent that physically distinct components are used, connections between components (*e.g*., for data communication) can be wired and/or wireless as desired. Thus, for example, execution of feature extractor **752** by processor **732** can cause processor **732** to operate inertial measurement unit **502** and cameras **508, 510** to capture images and/or audio signals of an object traveling across and in contact with a surface to detect its entrance by analyzing the image and/or audio data.

## Tracking

Tracking refers to capabilities rendered by system hardware and functional processes that enable a controlled device (robot, mobile platform, or VR/AR headset, goggles, or other hardware) to continuously localize itself and have positional awareness e.g., the sensor system can determine where it is in the real world.

### Architecture for Tracking System

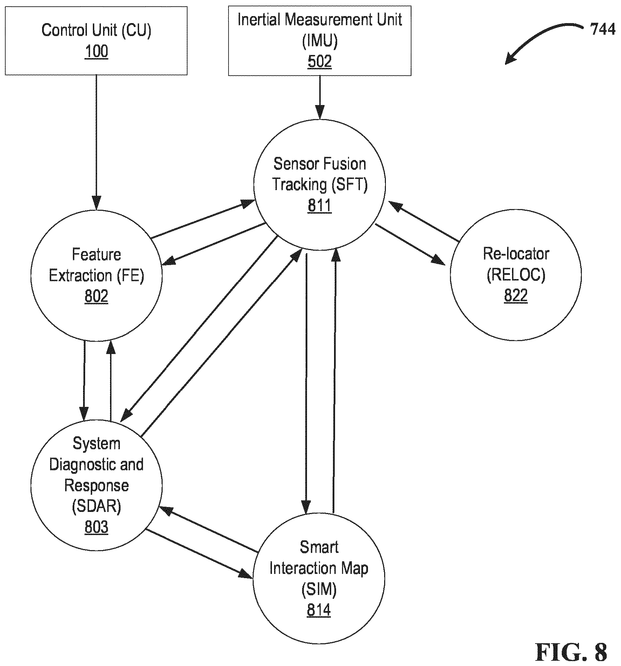

**FIG. 8** illustrates example architecture for a tracking system implementation. As shown in **FIG. 8,** components and information flows between components of an example fast accurate stable adaptive tracking ("FASAT") process **744** of **FIG. 7** are illustrated by feature extractor (FE) **802,** sensor fusion based tracker (SFT) **811,** smart interaction with map (SIM) processor **814,** a system diagnostics and response (SDAR) processor **803** and a Re-locator (RELOC) **822.** The data flows and operation of one example implementation of these components will next be described.

Feature Extraction

A feature extractor (FE) **802** represents the geometric understanding of a space from a machine's perspective view. Feature extractor **802** receives raw image information from control unit **100** and provides a salient points' representation hybrid point cloud map to a sensor fusion tracker (SFT) **811.** One implementation of a feature extractor **802** performs a variety of actions including image preprocessing, feature detection, and feature descriptor preparation.

Image processing tasks include performing Gaussian blur and gamma correction on raw image data.

### Feature Detection: Optical Flow

Optical flow gives 2D-2D correspondence between previous image and a current image. Feature extractor **802** generates a hierarchy of levels; each level generation is aligned with optical flow needs, and therefore need only be computed once.

Processed images are stored in a multiple hierarchical patch and/or undistorted patch. In an example implementation, as levels in the hierarchy increase, the more blur exists in the image. At each level in the hierarchy, the size of the image is reduced to ¼ of the size of the image from which it is derived, e.g. the size of the image in the previous level. For example, if an image on the first ("zero level") has a size 640X480, then the size of the corresponding image on the next higher level ("first level") has a size 320X240, and an next corresponding image at the next higher level ("second level") has a size 160X120. If the same feature point appears at more than one level, then that feature point is determined by the system to be a strong feature point. In the foregoing example, a scale factor of 2 is used, however, any scale factor can be selected, e.g., a scale factor of 1.6 provides the original 640X480 image with a next level image having a resolution of 400X300.

One feature extractor **802** implementation employs optical flow methods to match and link 2D features between two image frames, taken at times t and t+Δt at each voxel position. One such method, called a differential method, is based on local Taylor series approximations of the image signal, using partial derivatives with respect to the spatial and temporal coordinates. Accordingly, in an implementation, processing includes:

- Input: last image, current image, a list of detected feature locations from the last image,
- Output: a list of locations of the last image's detected features' in the current image
- Assumption: brightness consistency, image changes by and only by motion
- Action 1: predict the output locations by either just assuming there is no motion so the current locations are the same as last frame's feature locations, OR use inertial information retrieved from an IMU to predict the locations.
- Action 2: refine the pixel coordinate for each feature point by searching around the predicted location, matching patches, and using matching score to determine the refined position. Accordingly, the technology disclosed can provide implementations with the ability to gain increased performance by using inertial information from the IMU to narrow the search and save time.

Another implementation of feature correspondence processor **802** employs spatial-temporal methods to match and link 2D features between more than one image frames, captured from different camera at different time stamps. Accordingly, in an implementation, processing includes:

- Input: images captured by different cameras and at different time steps, a list of detected feature locations from the images,
- Assumption: brightness consistency, image changes by and only by motion
- Action 1, Temporal linking: Match and link 2D features detected from images captured from the same camera and with consecutive time stamps. The matching 2D features are located close to each other between images (i.e. location within ~ 20 pixels) and have similar feature descriptors.
- Action 2, Spatial linking to existing links: For each camera, (i) Collect a set of features that have not been matched to any existing links (i.e. features that are left out from "Temporal matching" from Action 1); (ii) Also collect a set of links that are available to be connected to 2D features from the selected camera. A link is available when it does not currently contain a 2D feature from the selected camera; (iii) Calculate the similarity between each 2D feature and each available link. The similarity between a feature and a link is the best similarity score between the descriptor of the feature and the descriptors of the features in the link. If the similarity score is less than a threshold, it is not possible to add the feature to the link; (iv) Sort the candidate matches between the 2D features and the links according to their similarity score; (v) Match the 2D feature to the link following the sorted similarity score. Once a 2D feature or a link is matched, any candidate matches with that particular 2D feature or that particular link are removed from the set of features that have not been matched and the set of links that are available to be connected; and (vi) Repeat (v) until no new matches are established.
- Action 3, Create new links: : For each camera, (i) Collect the set of 2D features that have not been matched to any existing links (i.e. features that are left out from both "Temporal linking" from Action 1 and "Spatial linking to existing links" from Action 2.); (ii) Calculate the similarity between a pair of 2D features. If the similarity is less than a threshold, it is not possible to match the pair of 2D features; (iii) Sort the candidate matches according to their similarity; (iv) Create a link from each match following the sorter similarity order. Once a 2D is matched, any candidate matches with that 2D feature is removed from the set of features that have not been matched and the set of links that are available to be connected.

In one implementation, the similarity of the descriptors between two 2D features may be recorded in a look-up table in memory for efficiency. In one implementation, to reduce outliers from spatial matching, two 2D features are allowed to be matched when their locations is within X pixels (~20 pixel) in vertical direction if the cameras are aligned horizontally. In another implementation, to reduce outliers from spatial matching, two 2D features are allowed to be matched when their locations is within $Y$ pixels (~20 pixel) in horizontal direction if the cameras are aligned vertically.

**Feature Detection: Shi-Tomasi**

One implementation of feature extraction processor **802** uses NEON-accelerated Shi-Tomasi feature detection with spatial binning in order to obtain features from regions to cover as much as possible for the full image. The feature extractor **802** uses IMU and the pose information received from sensor fusion tracker **811** in order to dynamically decide the regions to track and the parameters to use. Features are "interesting" parts of an image. Accordingly, in an implementation, processing includes:

- Action 1: calculate Eigen value of the intensity value of each pixel and its surrounding pixels; and determine (i) whether the feature is of interest; and (ii) for features of interest, a type of feature

  ∘ two small Eigen values: feature is not interesting
  ∘ one small, one big value: feature is likely an edge
  ∘ two big values: feature is likely a corner
  ∘ other type of features

- Action 2: refine

  ∘ Apply non-maximum suppression
  ∘ Apply spatial binning
  ∘ Apply heuristics
  ∘ Apply other types of refinement

**Feature Descriptor: ORB Descriptor**

One implementation of feature extractor **802** uses a SIMD-accelerated ORB descriptor to describe features. The description of a feature can be used for matching purposes and describing a feature's uniqueness. The ORB descriptor approach was selected for its relative rotational invariance and immunity to Gaussian image noise. One example of an ORB feature detector and binary descriptor can be found at "ORB feature detector and binary descriptor", http://scikit-image.org/docs/dev/auto_examples/plot_orb.html (last accessed August 17, 2016). For further information on ORB Descriptor, reference may be had to Ethan Rublee, et al., "ORB: an efficient alternative to SIFT or SURF", which is incorporated herein by reference for all purposes.

**Bag-of-words**

One implementation of feature extractor **802** performs bag-of-words extraction, determining from one image a byte array, sparse histogram over vocabulary. Accordingly, in an implementation, Bag-of-words processing includes using a list of feature descriptors in one image to extract Bag-of-words feature for one image. For example, in an image having 400 features with 400 corresponding descriptors, and a bag-of-word feature with the size of 256 bits. The resulting Bag-of-words is a 256 bit array, and one image only needs/has one 256 bit array. Bag-of-words is useful in performing relocalization as described herein below in further detail. Bag-of-words can indicate among A, B, C images, an image D has a matching score individually D-A, D-B, D-C. Say for example that D-B has the highest score, then the camera taking image D is closest to the camera pose used when taking image B, not A or C.

One implementation of feature extractor **802** adaptively adjusts a threshold that is applied to a number of features needed in order for the system to keep track of a moving object. Such intelligent thresholds include a threshold that is adaptively adjusted based upon device movement, sensor readings, situational or environmental variables (*e.g.*, low light, fog, bright light, and so forth) or combinations thereof. Once sufficient number of features (e.g., above the threshold) are identified, the system will continue to track an object. Otherwise, the system does not track the object. Feature extractor **802** will adaptively adjust the threshold based on device movement and other sensor levels.

SFT: Generating Pose information from Feature Extraction results and Inertial Data

Sensor fusion based tracker (SFT) **811** determines how to smartly use feature extraction results and inertial data from IMU **502** to generate pose accurately and rapidly. Sensor fusion based tracker **811** performs initialization for the system state, feature extractor initial state, interaction with map state, and other states. Sensor fusion based tracker **811** has logic to decide how to initialize the state including use how many first sample IMUs, how many images to skip, and any other initialization steps for specific hardware.

In an implementation, sensor fusion based tracker **811** performs IMU buffer management. Timestamps of IMU data frames are corrected and aligned. Additionally, IMU information that has not been processed yet is maintained in a buffer.

**Generating pose information for a visual-inertial sensor with successful visual updates:**

**Propagation:** Implementations can employ extended Kalman filtering (EKF), shown in a general nonlinear model form by equations (1), to extrapolate an initial pose using inertial data from the multi-axis IMU, to generate a propagated pose:

$$\dot{x} = f(x) + w$$

$$(1)$$

$$z = h(x) + n$$

where x denotes a state vector, f denotes a nonlinear function, h denotes observation nonlinear function, n denotes measurement noise, z denotes an observation vector, and w denotes a noise vector.

A linearized version of the discrete-time model of equation (1) is useful for covariance propagation and update, as well as gain computation is illustrated by equations (2):

$$\tilde{X}_{l+1} \cong \varphi_l \tilde{X}_l + w_l$$

$$(2)$$

$$\tilde{r}_l \cong H_l \tilde{X}_l + n_l$$

In an implementation, IMU data alone is used to perform propagation of the EKF. This enables certain implementations to provide fast results and at relatively low computation costs. An update process described below is employed to correct for "drifting" that occurs when only inertial information is used in the EKF to determine pose. Propagation can be performed in a number of ways: (i) the propagation happens right after an inertial measurement taken by the IMU arrives; or (ii) delayed propagation happens in batch right after an image taken by the visual sensors arrives but before the update procedure described below is performed. Of course, wheel odometry and/or user-defined control can also be used to perform propagation. In one implementation, a "plug-and-play" decision engine will decide if, when, and how to do multiple types of propagation.

**Update:** In an implementation, an update process is performed using image information together with IMU buffer samples, which can correct the pose which may be drifted from propagation. In a single observation implementation, based on the current image observation, the information needed for propagation, e.g., features, poses, map points, etc. is prepared. Then 2D-3D correspondence information for the optical flow tracked 2D features is obtained by directly using 2D-2D correspondences from optical flow tracking results. For the remaining 3D map points, smartly search over 3D with adaptive parameters by: (i) if the remaining number of points is small, e.g., below a threshold, perform a linear search, otherwise, (ii) if the remaining number of points is fairly big, e.g., above a threshold, perform a log(n) search with the use of a kd-tree or octree. During search, use previous time period velocity/acceleration to predict a pose so as to narrow the search region. Next, perform update, and generate pose for the current frame using only "good outstanding" points. Alternatively, perform the update twice: first only with high weights "good outstanding" points, then with all the map points. As used herein, the term "good outstanding" points denotes high quality points, e.g., those points having smaller reprojection error and/or being tracked many times in a good state, which can be selected by application of some heuristics.

In a multiple observation implementation, based on multiple previous image observation, information from multiple poses is used in the extended Kalman filter described herein with reference to equations (1) and (2). Every feature's whole life is used in the extended Kalman filter.

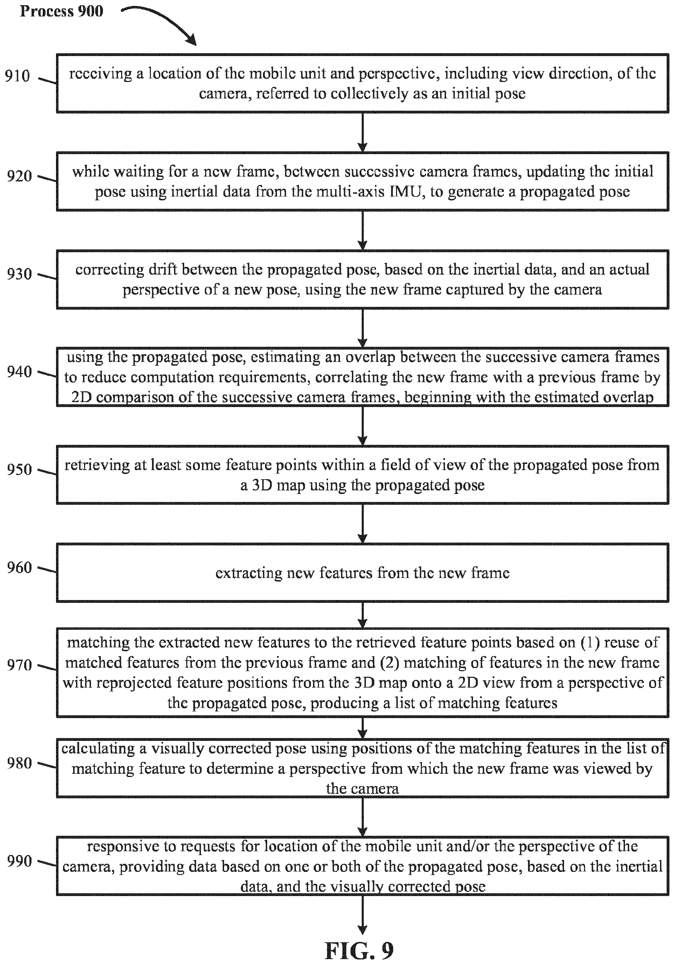

**FIG. 9** is a representative method **900** of updating a position of a mobile unit that includes a camera with distance calculation and multi-axis inertial measuring unit (IMU). Flowchart **900** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 9.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

FIG. 9 includes process **900** that begins at action **910,** where a location of the mobile unit and perspective, including orientation, of the camera, referred to collectively as an initial pose is received. In some implementations, initial pose representations include coordinate e.g., points (x, y, z) mapped to a coordinate system of a visual-inertial sensor disposed on a mobile platform, such as a robot, autonomous vehicle, or other autonomous or guided mobile platform.

Process **900** continues at action **920** where while waiting for a new frame, between successive camera frames, the initial pose is updated using inertial data from the multi-axis IMU, to generate a propagated pose.

At action **930,** drift between the propagated pose, based on the inertial data, and an actual perspective of a new pose, is corrected using the new frame captured by the camera. This action can include a number of actions as well:

At action **940,** using the propagated pose, an overlap between the successive camera frames is estimated to reduce computation requirements, and the new frame is correlated with a previous frame by 2D comparison of the successive camera frames, beginning with the estimated overlap.

At action **950,** at least some feature points within a field of view of the propagated pose are retrieved from a 3D map using the propagated pose.

At action **960,** new features are extracted from the new frame.

At action **970,** the extracted new features are matched to the retrieved feature points based on (1) reuse of matched features from the previous frame and (2) matching of features in the new frame with reprojected feature positions from the 3D map onto a 2D view from a perspective of the propagated pose, producing a list of matching features.

At action **980,** a visually corrected pose is calculated using positions of the matching features in the list of matching feature to determine a perspective from which the new frame was viewed by the camera.

At action **990,** responsive to requests for location of the mobile unit and/or the perspective of the camera, data based on one or both of the propagated pose, based on the inertial data, and the visually corrected pose is provided.

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

**Generating pose information for a visual-inertial sensor from past sensory data:**

In some instances, the mobile unit under guidance can have unsuccessful image updates due to hardware or software malfunctions of the cameras, blurred image due to sudden movement of the machine, obstruction of view, low illumination of the surrounding environment, etc. The mobile unit can also traverse in an unknown territory without any global map. In some implementations, the machine under guidance can also estimate its current pose by keeping a window of past readings of visual data, inertial data and tracking poses.

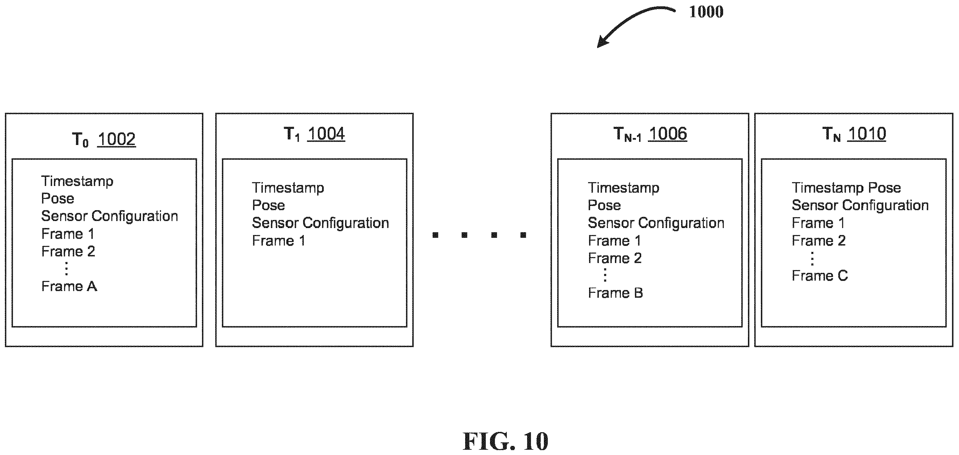

FIG. 10 is a symbolic drawing of a set of time dependent tracking states **1000.** As can be seen in FIG. **10,** the set of time dependent tracking states **1000** comprises of N tracking states numbered $T_0$-$T_N$, with N>=1. In one implementation, the set of time dependent tracking states **1000** can be in descending order in time where $T_0$ **1002** is the most current tracking state of the visual-inertial sensor **500,** and $T_1$ **1004** to $T_N$ **1010** represent past tracking states. In another implementation, the set of time dependent tracking states **1000** can be in ascending order in time where $T_N$ **1010** is the most current tracking state of the visual-inertial sensor 500, and $T_0$ **1002** to $T_{N-1}$ **1006** represent past tracking states. Each tracking state consists of (i) the timestamp at which the tracking states was captured; (ii) pose of the mobile unit at that timestamp, e.g. location, orientation, and velocity of the mobile unit; (iii) sensor configuration of the visual-inertial sensor 500, e.g. intrinsic parameters of the sensors (IMU bias, camera focal length, etc.) and extrinsic parameters (relative poses between the different sensors in the visual-inertial sensor **500**); and (iv) one or more frames of sensor readings from the visual sensors (cameras) and the inertial sensor (multi-axis IMU). Frames storing data from the visual sensors include sets of detected 2d feature points.

In one implementation, the number of tracking states in the set of time dependent tracking states **1000** is fixed and depends on the sensors. In one implementation, the number of tracking states in the set of time dependent tracking states **1000** is 30 in order to keep 1 second worth of visual sensor data for a 30 Hz camera. In one implementation, the number of tracking states in the set of time dependent tracking states **1000** is dynamically determined to maintain sensory data for a range of time. In one implementation, the number of tracking states in the set of time dependent tracking states **1000** is dynamically determined to maintain 1 second worth of visual sensor data. In one implementation, the number of tracking states in the set of time dependent tracking states **1000** is dynamically determined to maintain a manageable number of 2D feature points. In one implementation, the number of tracking states in the set of time dependent tracking states **1000** is dynamically determined to maintain less than 200 2D feature points.

**Propagation:** Implementations can employ extended Kalman filtering (EKF), shown in a general nonlinear model form by equations (3), to extrapolate an initial pose using inertial data from two or more tracking states from the set of time dependent tracking states **1000,** to generate a propagated pose:

$$\dot{x} = f(x) + w$$

$$(3)$$

$$z = h(x) + n$$

where x denotes a state vector, f denotes a nonlinear function, h denotes observation nonlinear function, n denotes measurement noise, z denotes an observation vector, and w denotes a noise vector.

A linearized version of the discrete-time model of equation (3) is useful for covariance propagation and update, as well as gain computation is illustrated by equations (4):

$$\tilde{X}_{l+1} \cong \varphi_l \tilde{X}_l + w_l$$

$$(4)$$

$$\tilde{r}_l \cong H_l \tilde{X}_l + n_l$$

In an implementation, IMU data alone is used to perform propagation of the EKF. This enables certain implementations to provide fast results and at relatively low computation costs. An update process described below is employed to correct for "drifting" that occurs when only inertial information is used in the EKF to determine pose. Propagation can be performed in a number of ways: (i) the propagation happens right after an inertial measurement taken by the IMU arrives; (ii) delayed propagation happens in batch right after an image taken by the visual sensors arrives but before the update procedure described below is performed; (iii) a number of IMU updates occurring after a successful image update; (iv) failure in one or more visual sensors; or (v) the motion detector predicts the mobile unit is moving.

**Update:** In an implementation, an update process is performed using image information from a set of time dependent tracking states **1000** together with inertial data. In a single observation implementation, pose update for one or more selected tracking frame in a set of time dependent tracking states **1000** is done by: (i) creating a 2D feature correspondences set comprising of common 2D feature points among the visual sensor frames from the selected tracking states; (ii) triangulating 2D feature points from the 2D feature correspondences set to form a 3D point set; (iii) selecting a subset of the 3D point set that includes 3D points having re-projection error within a threshold; and (iv) updating current poses for two or more of the tracking states within the set of time dependent tracking states subject based on the selected 3D points with low re-projection error. In one implementation, the above triangulation step further includes selecting 3D points having a triangulation error less than a determined number of pixels. In one implementation, the above triangulation step further includes adjusting the threshold for selecting 3d points based upon a quantity of 3D points available to update poses in the set of time dependent tracking states. In one implementation, the 3D points are further refined to have lower reprojection error using a least squares function.

In a multiple observation implementation, based on multiple previous image observation, information from multiple poses is used in the extended Kalman filter described herein with reference to equations (3) and (4). Every feature's whole life is used in the extended Kalman filter.

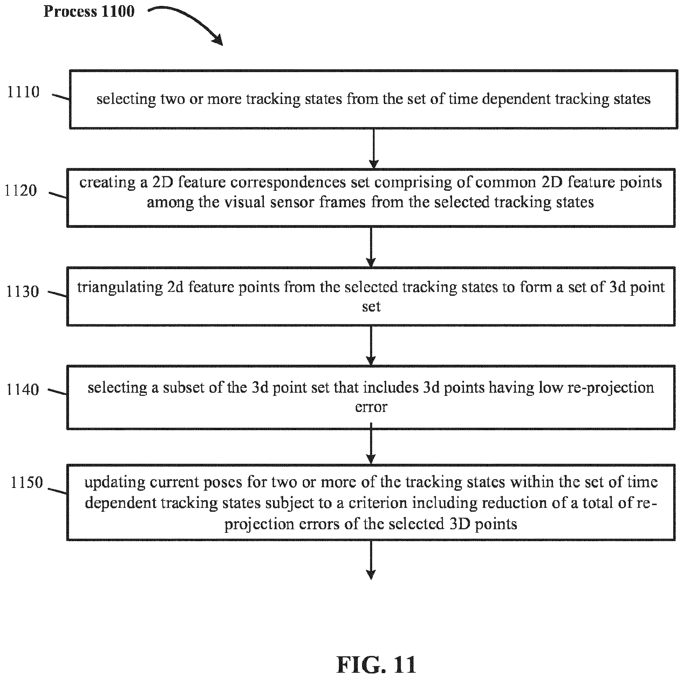

**FIG. 11** is a representative method **1100** of updating a position of a mobile unit that includes cameras with distance calculation, multi-axis inertial measuring unit (IMU), and a set of time dependent tracking states. Flowchart **1100** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 11.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

**FIG. 11** includes process **1100** that begins at action **1110,** where two or more tracking states are selected from a set of time dependent tracking states for the purpose of updating the pose associated with the selected tracking frame. The location, perspective and orientation referred to collectively as an initial pose of the mobile unit is updated at the selected tracking frame's timestamp.

Process **1100** continues at action **1120** where a 2D feature correspondences set is created, where the 2D feature correspondences set comprises of common 2D feature points among the visual sensor frames from the selected tracking states.

At action **1130,** 2D feature points from the 2D feature correspondences set are triangulated to form a 3D point set.

At action **1140,** a subset of the 3D point set which have a re-projection error within a threshold is selected from the 3D point set.

At action **1150,** current poses for two or more of the tracking states within the set of time dependent tracking states subject are updated based on the selected 3D points with low re-projection error.

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

SIM: Smart map interaction and localize

Smart interaction with map (SIM) processor **814** enables smart interaction by a device being guided (i.e., receiving positional awareness information from visual-inertial sensor system 600) with a known map in order to localize itself. Accordingly, one implementation of a smart interaction map processor **814** processing includes:

- Perform a query of the map based on a need and a current status. Some query components included by specific implementations are map points (xyz, uncertainty, average reprojection error, etc.), keyrigs' poses, 2D-3D constraint information, and occupancy grid (one layer or multiple layer). As used herein, the term keyrig denotes a set of image data received. In some implementations, the sets of image data include feature points and pose information. The pose information includes a location of the mobile device and view of the camera that captured the image data. The sets of image data are referred to collectively as keyrigs.
- If the map as a whole is not big, e.g., meets a particular threshold size, return the entire map.
- Otherwise, if the map is big, e.g., meets or exceeds a particular threshold size and covers large areas, e.g., spatial area meets or exceeds a particular threshold, smartly grab a local region of map based on the device's current position.
- If some area of the map is known to have bad quality, don't use it.
- Adaptively down-sample map based on system performance according to an adaptive parameter. For example: (i) if the 3D feature-based tracking process has been accurate, e.g., below a threshold number of errors or invocations of relocalization processing to relocalize a device that has lost its place, then reduce the sample size to conserve resources, otherwise, (ii) if the device is getting lost frequently, e.g., meets or exceeds a threshold, then increase the sample size to provide better tracking.

SPAR: Manage localization state and response strategy

System diagnostics and response (SDAR) processor **803** performs system level management of current localizing state of the visual-inertial sensor **500** and provides response strategy. In one implementation, the system diagnostics and response processor **803** monitors tracked map points and corresponding reprojection error, monitors the longevity of untracked map points, and suggests actions to mapping module, monitors device speed/acceleration/jitter/drift, monitors map "activity" (i.e., is it updated regularly?), performs new added map contribute enough to the overall mapping (i.e., so it's not doing useless hovering?), monitors keyrig topology (i.e., stretch enough or too much?), suggests when and where the device should add keyrig, and monitors feature extractor pipeline

Relocalize a lost device

Re-locator **822** recovers a device that has lost track of its positional from this state. Once re-locator **822** returns the lost device back on track, the device can resume normal interacting with smart interaction map processor **814,** and/or can contribute to map building, using the techniques described herein below.

**Relocalization**

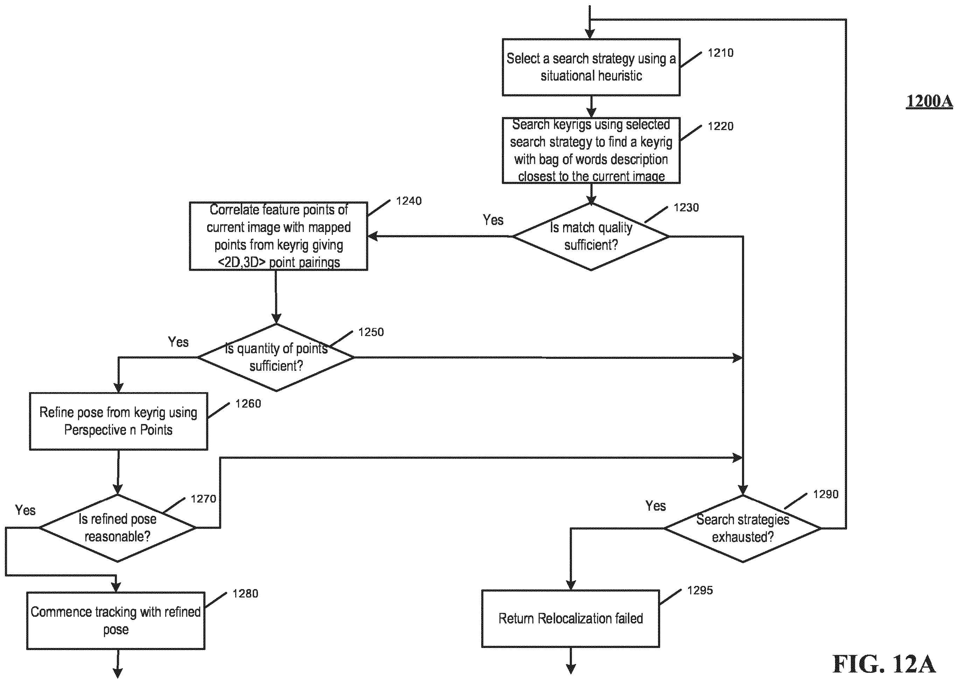

**FIG. 12A** illustrates an example of a relocalization process in one implementation. Accordingly, one implementation of relocalization processing **1200A** includes:

- In action **1210,** a search strategy is selected using a situational heuristic. For example, if there are many keyrigs, (e.g., > 50) and a fast recovery is needed, then select a search strategy of performing a best match (on Bag-of-Words features) among the keyrigs, and using the best-matched keyrig's pose as end-result. In another example, if it is determined that the system is well on-track before lost, then select a search over only the local (e.g., most recent x keyrigs) keyrigs for fast recovery. In a further example, if the system needs multiple hypotheses before further refinement, then select a search strategy that includes using the few best matches (on Bag-of-Words features). Other types of search strategies can be triggered using appropriate heuristics indicating a correspondence between the search strategy and one or more environmental variables (e.g., lighting change, visibility change due to fog, steam or mist, etc.) or one or more state variables (e.g., previously was tracking well before getting lost, had just performed a previous attempt to relocalize which has now failed, etc.).

- In action **1220,** the keyrigs are searched using the selected search strategy in order to find among the keyrigs a keyrig with bag of words description closest to a bag of words description of a current image.

- In action **1230,** determine whether the match quality is sufficient. This can be determined by applying a threshold to a quality of match indication or by other means. For example, a match quality indicator ranges from 0, denoting complete difference, to 1, denoting an exact match. A corresponding match quality threshold can be 0.85 indicating a minimum passing match quality. If the match quality is sufficient, then continue with action **1240.** Otherwise, continue with action **1290** to check whether an alternative search strategy can be employed, or if available applicable search strategies have been exhausted, and continue processing in action **1210** with an alternative search strategy or in action **1295** return an error condition indicating that the relocalization failed.

- In an action **1240,** correlate feature points of the current image with mapped points from the keyrig selected in action **1220,** yielding <2D, 3D> point pairings. The point pairings indicate a relationship between the 2D current image and the 3D map of the selected keyrig.

- In an action **1250,** determine if the quantity of points is determined to be sufficient. This can be determined by applying a threshold to the quantity of 2D image points having a correspondence with a 3D point in the map of the selected keyrig. For example, in one implementation 6 or more points are sufficient; while in another implementation 20-30 points are required. If the quantity of points is sufficient, then continue with action **1260.** Otherwise, continue with action **1290** to check whether an alternative search strategy can be employed, or if available applicable search strategies have been exhausted, and continue processing in action **1210** with an alternative search strategy or in action **1295** return an error condition indicating that the relocalization failed.

- In action **1260** refine the pose from the best matched keyrig and perform perspective-n-points (PnP) - or other pose estimation method that computes a pose from 2 sets of 2D image features. While any of a wide variety of PnP implementations can be used to refine pose information, one OpenCV API called solvePnPRansac has been found to perform acceptably in an example implementation. Further description of the solvePnPRansac API can be obtained with reference to "Camera Calibration and 3D Reconstruction" http://docs.opencv.org/master/d9/d0c/group_calib3D.html#gsc.tab=0 (last accessed August 22, 2016).

- In an action **1270,** determine whether the refined pose is reasonable. In one implementation a refined pose is considered reasonable if the refined pose meets criteria: (i) the refined pose is sufficiently similar (e.g., within a tolerance or below a threshold) in position and perspective from the pose of the identified keyrig selected based upon the matching in action **1220**; and (ii) reprojection of 3D points in the <2D, 3D> point pairings identified in action **1240** yields a new 2D point on the 2D image plane, where the new 2D point has coordinates sufficiently similar (e.g., within a tolerance or below a threshold) to the original 2D point of the <2D, 3D> point pairing. If the defined pose is reasonable, then continue with action **1280.** Otherwise, continue with action **1290** to check whether an alternative search strategy can be employed, or if available applicable search strategies have been exhausted, and continue processing in action **1210** with an alternative search strategy or in action **1295** return an error condition indicating that the relocalization failed.

- In an action **1280,** commence tracking with the refined pose. Also, record the whole recovery information, and:

   o update machine state with the refined pose information as the current pose
   o put the device back on track with some uncertainty

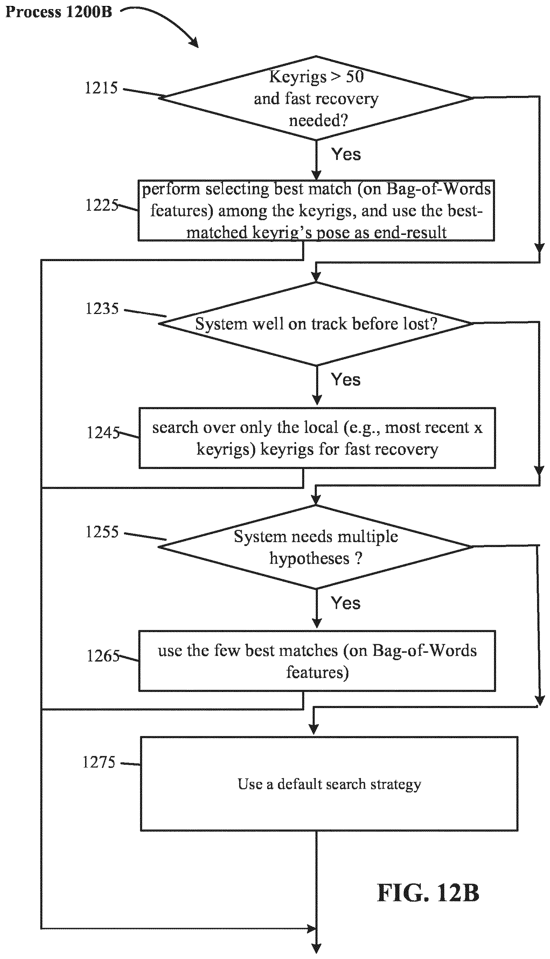

FIG. **12B** illustrates an example of a relocalization search strategy selection process in one implementation. Accordingly, one implementation of the processing **1200B** provides selecting a search strategy using a situational heuristic that includes:

- In action **1215,** determine whether there are many keyrigs, (e.g., > 50) and whether a fast recovery is needed. If this is the case, then in an action **1225,** select a search strategy of performing a best match (on Bag-of-Words features) among the keyrigs, and using the best-matched keyrig's pose as end-result.

- In an action **1235,** it is determined whether the system was well on-track before lost. If this is the case, then in an action **1245,** select a search over limited to the local keyrigs (e.g., most recent X keyrigs) for fast recovery.

- In an action **1255,** determine whether the system needs multiple hypotheses before further refinement. If this is the case, then in action **1265,** select a search strategy that includes using the few best matches (on Bag-of-Words features).

- In an action **1275** a default search strategy is selected in the event that a situation is encountered that does not meet criterion specified by at least one of the heuristics. Other types of search strategies can be triggered using appropriate heuristics indicating a correspondence between the search strategy and one or more environmental variables (e.g., lighting change, visibility change due to fog, steam or mist, etc.) or one or more state variables (e.g., previously was tracking well before getting lost, had just performed a previous attempt to relocalize which has now failed, etc.).

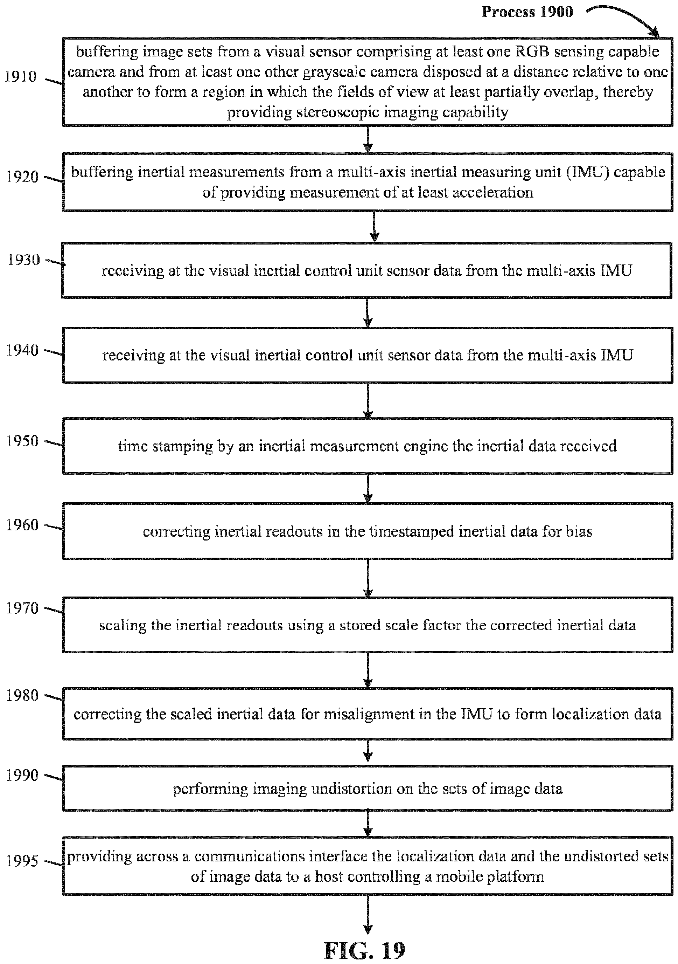

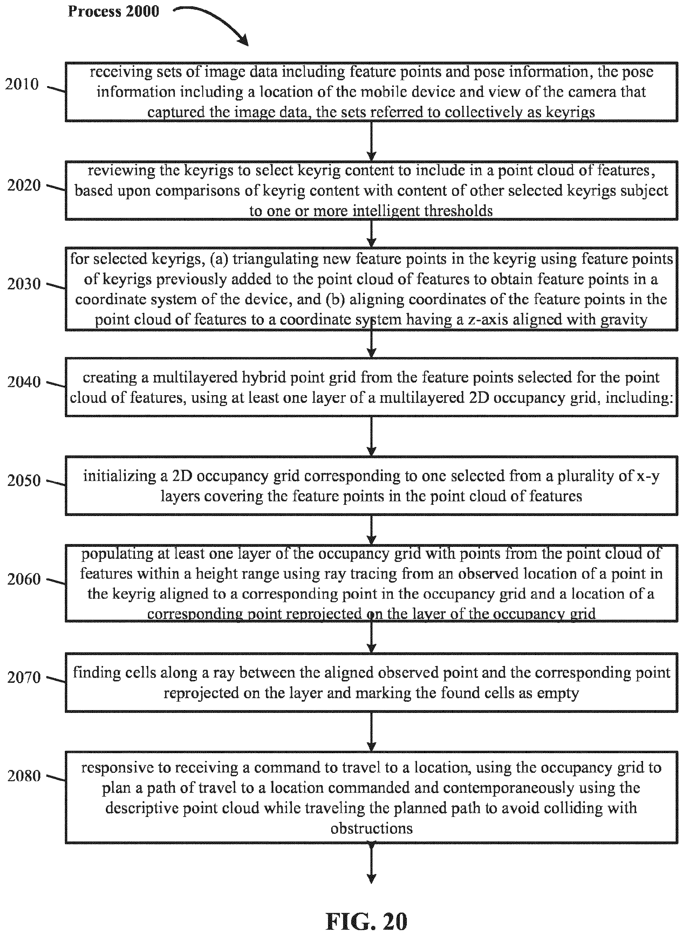

Geometric information obtained by 3D feature-based tracking is used to construct a hybrid grid that represents the features in a map useful in guiding a mobile device. The process of performing this task is described next with reference to examples depicted by **FIGs. 19** and **20.**

**Mapping**

In implementations, geometric information obtained by a 3D feature-based tracking process is represented using a descriptive point cloud representation. The descriptive point cloud is a set of sparse 3D points, where each point encodes a 3D geometric location, an uncertainty of the geometric location, and a set of 2D location plus appearance-based descriptors, each observed by a keyrig. A keyrig contains (i) a Timestamp where the images in the keyrig is captured; (ii) a pose (i.e. the transformation from the visual-inertial sensor's **500** coordinate to the map coordinate at the current time) and its uncertainty; and (iii) a sequence of IMU readings starting from a first temporal point before the timestamp to a second temporal point after the timestamp. Some implementations further include a flag to specify whether the visual-inertial sensor **500** is moving or static. This flag can be set from information obtained from the IMU readings.

<u>**Hybrid Representation**</u> (not falling under the claimed invention)

Implementations represent the spatial information perceived by a 3D feature-based mapping system and optionally an active ranging sensor (placed in parallel to the ground plane) using a hybrid point grid representation. One example implementation of a hybrid point grid representation combines a descriptive point cloud and a multi-layer 2D occupancy grid map.

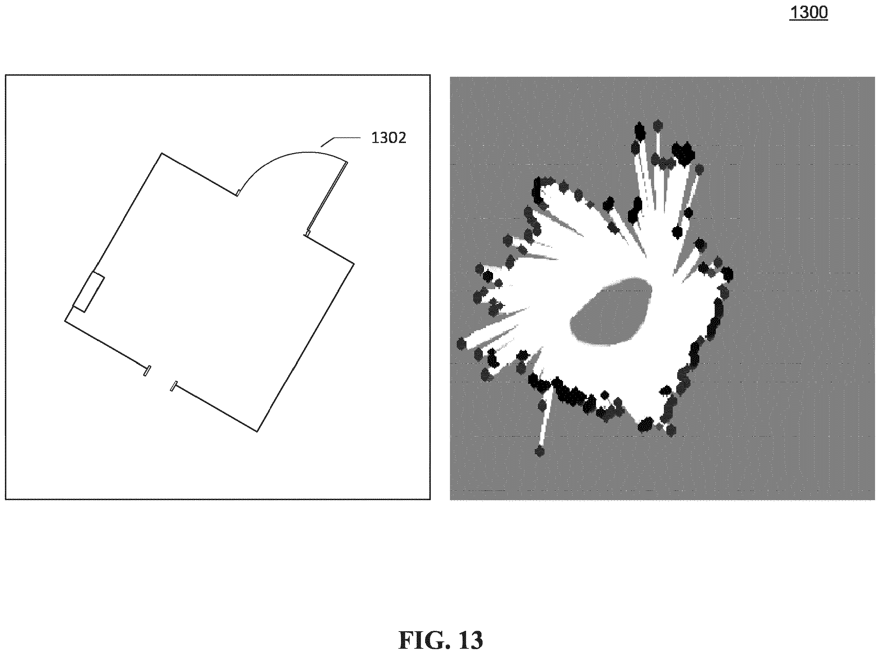

The occupancy grid map can be a plane oriented substantially perpendicular to the direction of gravity. Each layer has a specific height. (The layer on the floor is typically 0 according to one convention.). **FIG. 13** illustrates an example of an occupancy grid map in one implementation. Occupancy grid **1300** of **FIG. 13** indicates a single layer, such as a floor layer **1302,** mapped by an implementation of the visual-inertial sensor **500.** The white portions of occupancy grid **1300** indicate empty space - in other words space that has been determined by visual-inertial sensor **500** to be unoccupied. For example, when visual-inertial sensor **500** is able to look through the room door and window to note space beyond the walls of the room that is unoccupied, these regions are marked accordingly in occupancy grid **1300.** Portions in solid black indicate space that is occupied by an object or obstacle. The gray portions indicate space that the visual-inertial sensor **500** has not yet determined whether these spaces are occupied or empty.

A 3 degrees of freedom transform that relates the descriptive point cloud coordinates to the gravity-based coordinates. For example, if the normal vector of the ground plane (i.e., gravity) is known, first rotate the point cloud so that the z-axis of the point cloud is parallel to the gravity, using a 3-by-3 rotation matrix $R = R\_pitch*R\_roll$. Then, (optionally) translate the point by $[0, 0. T\_z]$ so that the z=0 is on the ground plane. Note, a normal 3-by-3 rotation matrix has 3 degrees of freedom ($R\_yaw,* R\_pitch * R\_roll$), however in this case are only 2 degrees. A normal 3-by-1 translation has 3 degrees of freedom ($[t\_x, t\_y, t\_z]$), but here there is only 1 degree.

<u>**Creating a Point Cloud for Features Representation**</u>

Implementations incrementally create a descriptive point cloud from the results of 3D feature-based tracking by adding keyrigs according to a criterion, such as in a following example. Result of 3D feature based tracking is received in sets of image data that include feature points and pose information. The pose information includes a location of the mobile device and view of the camera that captured the image data. These sets are referred to collectively as keyrigs. Accordingly, an implementation builds a descriptive point cloud by selecting keyrigs using one or more criteria such as for example the following:

- The first image frame is selected as a keyrig, and the device coordinate frame at that timestamp become the coordinates of the descriptive point cloud. This establishes a frame of reference.

- The latest keyrig's timestamp is less than current timestamp for a time threshold (typically 2 sec).
- The distance between the current tracked pose to the latest keyrig's location is larger than a threshold (e.g., x meters).
- The distance between the current tracked pose to the latest keyrig's pointing angle is larger than a threshold (e.g., y degrees)
- The current image contains a percentage of features not included in the current descriptive point cloud.
- The device is currently static. This information can be obtained from inertial information from the IMU's signals.

If the keyrig being considered for addition contains features not included in the current descriptive point cloud, triangulate the new features from images captured from the device at this timestamp to obtain the points in the device's coordinate frame. Add the new points to the map by transforming the points from the device's coordinate frame to the map's coordinate frame. Noteworthy is that some implementations include one or more of (i) triangulating new feature points across images from a current/same keyrig (e.g. between left and right cameras), (ii) triangulating new feature points across images from two different keyrigs, wherein the two different keyrigs are not necessarily in sequence (e.g. left camera from keyrig 1 to left camera from keyrig 10), and (iii) triangulating new feature points from images in keyrigs chosen based upon a criterion (e.g., smart selection of an "optimal" keyrig). The transform is determined using feature-based tracking or other methods.

### Refining a Point Cloud

In one implementation, a descriptive point cloud from the 3D feature-based tracking is refined by obtaining an "optimal" (i) pose of each keyrig and (ii) 3D locations of all the points that minimizes weighted sum of re-projection errors of all the points projected to their observed keyrigs, and (iii) optionally, the accelerometer readings from keyrigs with static flag must be [0, 0, 1] to force the z-axis of the map coordinate to be closer to gravity direction, while fulfilling the following constraint (if applicable): the pose moves along a plane (if the device is mounted on a vehicle with planar motion).

In one implementation, refining a descriptive point cloud from the 3D feature-based tracking is performed with limited computation resources by the following processing:

- Randomly sample N number of keyrigs from the entire set of keyrigs.
- Accurately refine the pose of the sample set of keyrigs and the 3D points observed in these keyrigs by minimizing the weighted sum of the (i) re-projection errors of all the points projected to their observed keyrigs, and (ii) optionally, the accelerometer readings from keyrigs with static flag must be [0, 0, 1] to force the z-axis of the map coordinate to be closer to gravity direction, while fulfilling the following constraints (if applicable): the pose moves along a plane (if the device is mounted on a vehicle with planar motion).
- Repeat the sampling and minimizing except fixing the 3D points and the poses that have already been optimized from the previous iteration.
- Iterate until a desired percentage of keyrigs and points are optimized.

In one implementation, refining a descriptive point cloud from the 3D feature-based tracking is performed with limited computation resources by the following processing:

- Randomly select a first subset of keyrigs from the entire set of keyrigs, and classify the keyrigs from the first subset of keyrigs as free keyrigs.
- Select a second subset of keyrigs that share a field of view with keyrigs in the first subset of free keyrigs, and classify the keyrigs from the second subset of keyrigs as free keyrigs.
- Classify any keyrig not included in the first and second subsets of free keyrig as fixed keyrigs.
- Classify 3D points into 3 categories: (i) free 3D point: 3D points within a viewpoint of more than two keyrigs, including at least one free keyrig from the first and second subsets of free keyrigs, (ii) semi-free 3D point: 3D points within a viewpoint of one free keyrig from the first and second subsets of free keyrigs, and (iii) fixed 3D point: 3D points within a viewpoint of only fixed keyrigs.
- Refining the point cloud by optimizing the free 3D points.

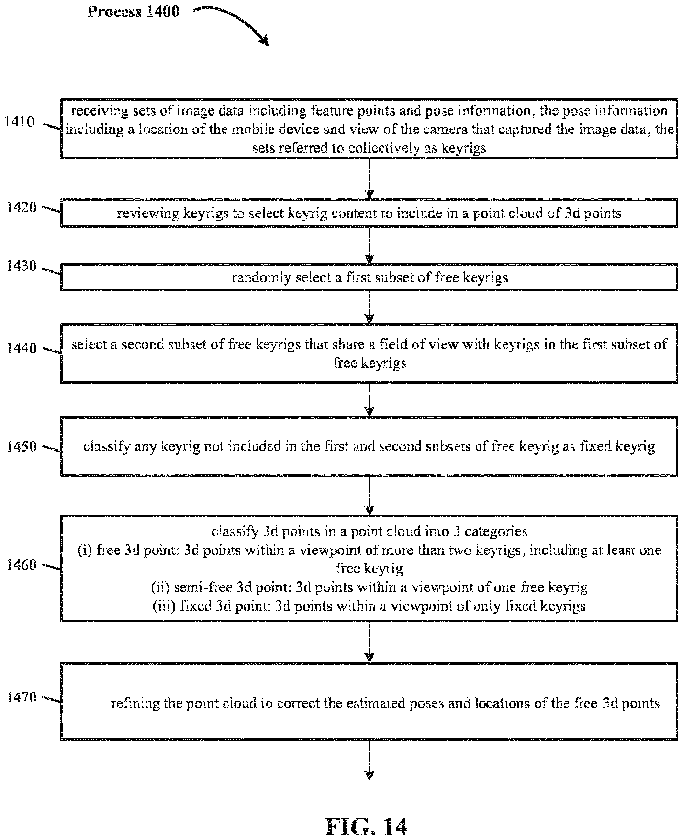

**FIG. 14** is a representative method **1400** of refining 3D points and poses of keyrigs in a point cloud to guide a mobile device that includes cameras with distance calculation and multi-axis inertial measuring unit (IMU). Flowchart **1400** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 14.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

At action **1410,** sets of image data including 3D feature points and pose information are received. The pose information includes a location of the mobile device and the view of the camera that captured the image data. The sets are collectively referred to as keyrigs. The visual sensor is disposed on a mobile platform, such as a robot, autonomous vehicle, or other autonomous or guided mobile platform.

At action **1420,** a set of keyrigs are reviewed to select keyrig content to be included in a map of 3D points.

At action **1430,** a first subset of keyrigs is randomly selected from the entire set of keyrigs, and the keyrigs from the first subset of keyrigs are classified as free keyrigs.

At action **1440,** a second subset of keyrigs that share a field of view with keyrigs in the first subset of free keyrigs are selected, and the keyrigs from the second subset of keyrigs are classified as free keyrigs.

At action **1450,** any keyrig not included in the first and second subsets of free keyrig are classified as fixed keyrigs.

At action **1460,** 3D points are classified into 3 categories: (i) free 3D point: 3D points within a viewpoint of more than two keyrigs, including at least one free keyrig from the first and second subsets of free keyrigs, (ii) semi-free 3D point: 3D points within a viewpoint of one free keyrig from the first and second subsets of free keyrigs, and (iii) fixed 3D point: 3D points within a viewpoint of only fixed keyrigs.

At action **1470,** the free 3D points are optimized, resulting in a more refined point cloud.

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

In one implementation, refining a descriptive point cloud from the 3D feature-based tracking can be performed every N seconds. In one implementation, N can be 1 second.

In one implementation, refining a descriptive point cloud from the 3D feature-based tracking is performed when the difference between the current location of the mobile device and the last triggering pose is larger than a threshold, i.e. when the device has moved more than X meter or has changed orientation more than Y degree. In one implementation, X can be 0.5 meter. In one implementation, X can be greater than 0.5 meter. In one implementation, Y can be greater than 40 degrees.

In one implementation, refining a descriptive point cloud from the 3D feature-based tracking is performed when a current pose is sufficiently distinct enough in comparison to a plurality of keyrigs in the map. In one implementation, being sufficiently distinct includes the mobile unit traveling more than 0.5 meter. In one implementation, sufficiently distinct includes the mobile unit rotating more than 40 degrees.

**Creating a Hybrid Point Grid** (not falling under the claimed invention)

In one implementation, an initial hybrid point grid representation is created from a descriptive point cloud using the following processing:

- Transform the descriptive point cloud from its original coordinate frame to a coordinate frame where z-axis is along the gravity direction. This transformation has 2 degrees of freedom (in rotation).
- Initialize a 2D occupancy grid map for layers that cover the x-y points in the descriptive point cloud.
- Each layer of the occupancy grid map is filled in by points (in the descriptive point cloud) within a height range using ray tracing process.

**Refining a Hybrid Point Grid**

In one implementation, the hybrid point grid representation is refined using information from active sensors using the following processing:

- Obtain the pose, (transform from the device coordinate to the map's coordinate) where each active sensor's signal is captured, from the trajectory of the device in the map's coordinate frame.
- Use ray tracing process to update the 2D occupancy grid map.

In one implementation, the refining hybrid point grid representation from an updated descriptive point cloud is performed using the following processing:

- Transform the descriptive point cloud's coordinate frame to the gravity-based coordinate frame.
- Use ray tracing process to determine which cells to update from each point in the descriptive point cloud.

## Estimating a Trajectory for a Guided Device

In one implementation, an offline trajectory of a device between two consecutive keyrigs (i.e. from keyrig k to keyrig k+1) in a descriptive point cloud is estimated using the following processing:

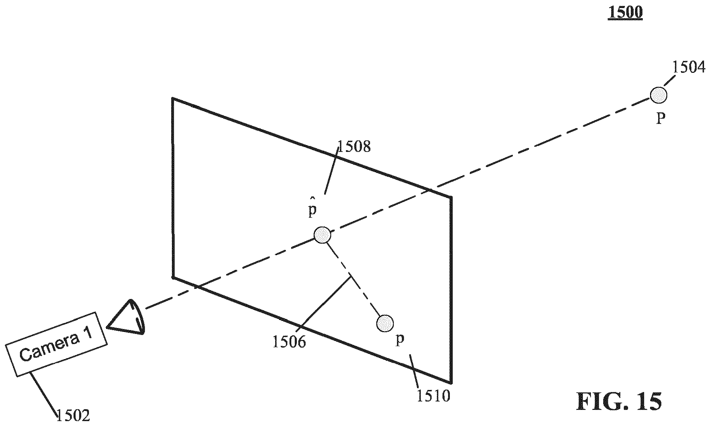

- Initialize the image frame that creates keyrig k to be at its pose stored in the descriptive point cloud.
- Use the "3D feature-based tracking process" as described herein under section heading "Tracking" to track the image frames between the two keyrigs. Each image frame has a 6-degrees of freedom pose, and a set of correspondences of 3D map point to 2D image observed location.
- Force the image frame that creates keyrig k+1 to be at its pose stored in the descriptive point cloud.
- Refine all the poses by minimizing the sum of reprojection errors of all observed locations. The reprojection error is the error between a reprojected point in the camera coordinate frame and the original point. **FIG. 15** illustrates an example of reprojection **1500.** In **FIG. 15,** some points in the reference frame of camera **1502** are used to triangulate one or more new 3D points P **1504** in the world coordinate frame. Due to errors in the calibration of the camera(s) **1502,** the spatial position of point P **1504** will not be completely accurate. The reprojection error **1506** can be determined from the resulting 3D point P **1504** re-projected into the coordinates of the camera **1502** (using the calibration data for the camera), obtaining a new point $\hat{p}$ **1508** near the originally projected p **1510.** The reprojection error **1506** is the straight line distance between the original point **p 1510** and the reprojected point $\hat{p}$ **1508.**

## Estimating a Transform for a descriptive point cloud and Gravity Based Frame

In one implementation, the 2 degrees of freedom coordinate transform between the descriptive point cloud to a coordinate where z-axis is along the gravity direction is estimated using any of the following methods:

- Measuring the gravity direction from IMU (accelerometer) while it is static, and find a rotation matrix that transforms the gravity direction to [0, 0, 1].
- Obtain at least 3 points on the ground-plane from the descriptive point cloud to estimate the ground-plane's normal in the original coordinate. Find a rotation matrix that transforms the ground-plane's normal to [0, 0, 1] or [0, 0, -1].
- Offline calibrate the relation between the visual-inertial sensor **500** to the ground by placing a known planar pattern on the ground to determine the rotation matrix.

## Robot Implementation

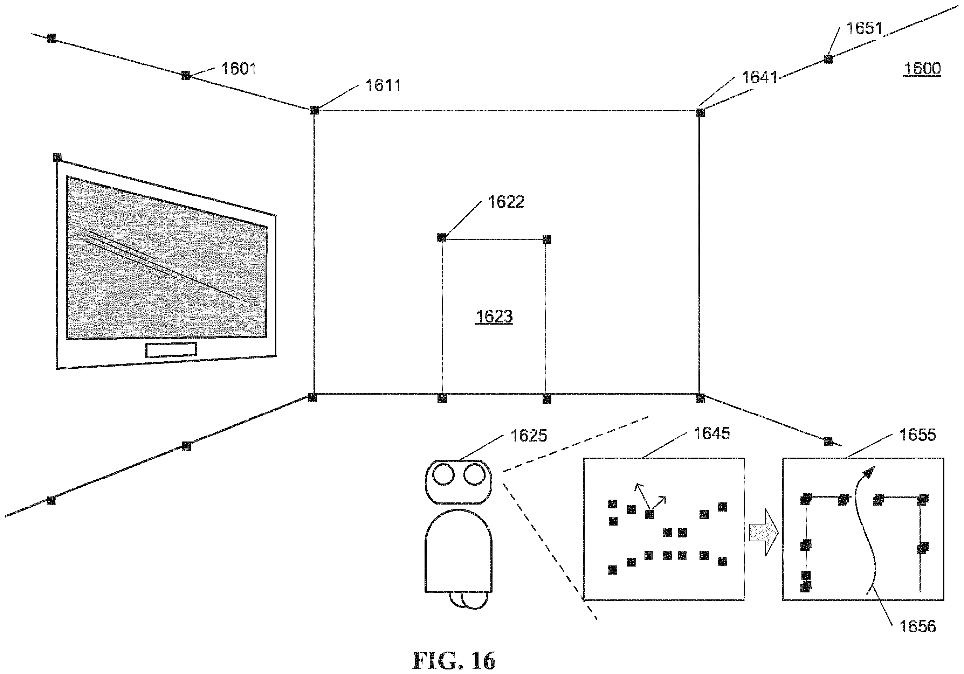

**FIG. 16** illustrates an example model of robot guidance using image and inertial information techniques described herein, which does not fall under the claimed invention. Examples of robot applications that benefit from employing positional awareness techniques such as described herein include:

- Caregiver and Service robots (traveling on a ground plane)
- A robot vacuuming/mopping/cleaning the floor.
- A robot being commanded to carry objects around the environment.
- A telepresence robot moving around a remote environment automatically.
- A robot butler that follows a person around.

In each of the scenarios listed above, the robot utilizes the technology disclosed herein in order to track its own location and to recognize the objects that it encounters. Also, since the robot performs many complex tasks, each with real-time constraints, it is beneficial that the sensing be done rapidly to accelerate the perception pipeline. In implementations, this can be achieved by offloading some computation from the main processor to the visual-inertial sensor **500.** In addition, since it is a mobile robot, which carries limited storage capacity battery, energy consumption is a design point. In implementations, some computational tasks are off loaded from the main processor to the visual-inertial sensor **500** to reduce power consumption, thereby enabling implementations to achieve overall energy efficiency. Cost is an issue in mobile robots, since lowering the cost of the robot makes the robot affordable to more customers. Hence cost can be another factor for sensor and guidance system design. In implementations, one low-cost grayscale sensor is used for localization tasks, and one colored sensor for recognition tasks. This design point enables these implementations to significantly reduce the cost over a stereo colored sensor designs without sacrificing performance.

In **FIG. 16,** the walls, corners and door **1623** of room **1600** as well as the travels of service robot **1625** on the floor of room **1600** are reflected in the hybrid point grid, comprised of descriptive point cloud **1645** and occupancy grid **1655,** developed by the visual-inertial sensor **500** using the technology described herein above in the Mapping section. The occupancy grid **1655** is a part of the hybrid point grid that is a layer of the multi-layer 2D occupancy grid map described in the Mapping section. To build a map of an unknown (newly exposed) environment, the visual-inertial sensor **500** equipped robot **1625** keeps track of its pose using the technology described herein above in the Tracking section while incrementally building an initial descriptive point cloud using the technology described herein above in the Mapping section. Then, the robot **1625** builds an occupancy grid **1655** to complete the hybrid point grid from the initial descriptive point cloud **1645** using the technology described herein above in the Mapping section.

### Obtain Real Time Image and Inertial Information

In order to track its location, the robot senses its own movement through visual-inertial sensor **500.** The visual-inertial sensor **500** generates reliable inertial data so that the tracking and mapping pipeline that follows can accurately infer the robot's location. **FIG. 16** illustrates an example robot guidance application in which one implementation can be embodied. As illustrated by **FIG. 16,** robot **1625** implements visual-inertial sensor **500** to self-localize within a room **1600.** The robot **1625 in FIG. 16** employs the cameras **508, 510** of a visual sensor **500** in order to capture image frames of the surrounding environment of room **1600.** The images are processed according to the technology disclosed herein above under the Sensor Visual Data Generation and Processing section as follows:

### Detect and Describe Features in Captured Images

Visual-inertial sensor **500** determines feature points **1601, 1611, 1641, 1651, 1622,** and so forth for the walls, corners and door **1623** of room **1600** from the information in the captured image frames. In some implementations, Shi-Tomasi feature detection is employed to determine the feature points **1601, 1611, 1641, 1651, 1622** from the image frames. Features are assigned descriptors using ORB feature description. Optical flow techniques are used to determine 2D correspondences in the images, enabling matching together features in different images.

### Map Feature descriptors to a Hybrid Point Grid

The visual-inertial sensor **500** equipped robot **1625** can build a descriptive point cloud **1645** of the obstacles in room **1600** enabling the robot **1625** to circumnavigate obstacles and self-localize within room **1600.** Visual-inertial sensor **500** creates, updates, and refines descriptive point cloud **1645** using feature descriptors determined for room features indicated by points **1601, 1611, 1641, 1651, 1622** using the technology disclosed herein above under the Mapping sections. As depicted schematically in **FIG. 16,** descriptive point cloud **1645** includes coordinates and feature descriptors corresponding to the feature points **1601, 1611, 1641, 1651, 1622** of room **1600.** Visual-inertial sensor **500** prepares an occupancy map **1655** by reprojecting feature points **1601, 1611, 1641, 1651, 1622** onto a 2D layer corresponding to the floor of the room **1600.** In some implementations, second and possibly greater occupancy maps are created at differing heights of the robot **1625,** enabling the robot **1625** to navigate about the room **1600** without bumping its head into door soffits, or other obstacles above the floor.

Now with renewed reference to **FIG. 13,** which illustrates an example of an occupancy grid **1300,** the white portions indicate empty space - in other words space that has been determined by visual-inertial sensor **500** to be unoccupied. Portions in solid black indicate space that is occupied by an object or obstacle. The gray portions indicate space that the visual-inertial sensor **500** of robot **1625** has not yet determined whether these spaces are occupied or empty.

The descriptive point cloud **1645** and occupancy grid **1655** comprise a hybrid point grid that enables the robot **1625** to plan paths of travel through room **1600,** using the occupancy grid **1655** and self-localize relative to features in the room **1600** using the descriptive point cloud **1645.**

### Using the Occupancy Grid and Path Planning

When the robot is activated in a previously mapped environment, the robot uses the technology described herein above in the Tracking sections to self-locate within the descriptive point cloud **1645.** The descriptive point cloud **1645** and occupancy grid **1655** comprise a hybrid point grid representation that is key to enabling robot action (i.e. moving on the floor) using passive sensors because the robot uses the occupancy grid **1655** in order to plan a trajectory **1656** from its current location to another location in the map using the technology described herein above in the Mapping sections. A person or entity can also command the robot to go to a specific point in the occupancy grid **1655.** While traveling, the robot uses the descriptive point cloud **1645** to localize itself within the map as described herein above in the Tracking sections. The robot can update the map using the techniques described herein above in the Mapping sections. Further, some implementations equipped with active sensors (e.g. sonar, LIDAR) can update the map using information from these sensors as well.

**VR/AR Implementations**

In both AR and VR usage scenarios, the headset, goggles or other VR/AR presentation device employs the visual-inertial sensor **500** to track its own location, and in some applications recognizes the objects that it encounters. In order to track its location, the VR/AR presentation device needs to sense its own movement, which is accomplished using the visual-inertial sensor **500** technology described herein. Accordingly, the visual-inertial sensor **500** generates reliable inertial data so that the tracking and mapping pipeline that follows can accurately infer the VR/AR presentation device's location. **FIG. 17** illustrates an example VR application in which one implementation can be embodied.

In **FIG. 17,** a user wears a VR/AR presentation device, headset **1725.** Headset **1725** is equipped with a visual-inertial sensor **500** creates, updates, and refines descriptive point cloud **1745** using feature descriptors determined for room features indicated by points **1701, 1711, 1741, 1751, 1722** of room **1700** and points **1716** of objects within room **1700** using the technology disclosed herein above under the Mapping sections. As depicted schematically in **FIG. 17,** descriptive point cloud **1745** includes coordinates and feature descriptors corresponding to the feature points **1701, 1711, 1741, 1751, 1722** of room **1700** and points **1716** of objects within room **1700.** Visual-inertial sensor **500** prepares hybrid point grid **1755** of the room **1700** mapping space by reprojecting feature points **1701, 1711, 1741, 1751, 1722** and **1716** onto 2D layers corresponding to various heights above (and including) the floor where feature points were found within the room **1700.** Accordingly, hybrid point grid **1755** provides a mapping of the space in room **1700** by stacked 2D layers indicating feature points corresponding to boundaries and objects in the room **1700.** In some implementations, free space **1756** can be identified by the visual-inertial sensor **500** as available for display of VR presentation **1715** and communicated to the VR presentation mechanisms of headset **1725** enabling headset **1725** to appropriately render VR presentation **1715** to appear within space **1756** to the wearer.

Headset **1725** can be communicatively coupled to a source of content for presenting VR presentation **1715** to the wearer. While depicted as a wireless connection to a hotspot coupled to a network gateway that further couples to a source of content for VR presentation **1715,** headset **1725** can be coupled to presentation content using any of a wide variety of mechanisms, wired or wireless. Further, presentation content for rendering VR presentation **1715** can be downloaded and stored on some headset **1725** implementations.

The foregoing operational principles are easily applied to other common VR applications such as gaming and socially enabled experiences. In gaming for example, game play is conducted by users while wearing a VR/AR presentation device. The game is displayed to a user ("gamer") by the VR/AR presentation device. The visual-inertial sensor **500** equipped VR/AR presentation device conducts orientation tracking, translation movement of the gamer that can be reflected to the game displayed by the VR/AR presentation device, enabling the gamer to move freely within a certain area of surrounding space. A visual-inertial sensor **500** equipped VR/AR presentation device provides mobile VR games with such "inside-out" e.g., integrated within the VR/AR presentation device, tracking thereby obviating the need for some kind of external position sensors such as are required by conventional VR/AR headsets. Yet further, if the gamer uses the VR/AR presentation device frequently in the same area, e.g., the gamer's living room, the visual-inertial sensor **500** can smartly re-use or update an existing (e.g., previously created by the visual-inertial sensor **500**) map of this space to provide position tracking.

In socially enabled experiences for example, a celebrity/sports star/singer (creator) performs live in front of a stereo video camera that provides a live video stream as content to fans. Fans wearing a VR/AR presentation device equipped with the visual-inertial sensor **500** (attached or embedded) can consume this live video feed as a VR presentation. When the fans get excited/sad/happy, they move about just as they would during an in person live experience. The visual-inertial sensor **500** performs position tracking, and provides input to the VR/AR presentation device enabling adjusting the live video feed accordingly based on the position tracking. Accordingly, the fans and creator can "interact" with the help of the disclosed technology.

**FIG. 18** illustrates an example AR application in which one implementation can be embodied. In **FIG. 18,** two users wear VR/AR presentation devices, headsets **1805, 1825.** Headsets **1805, 1825** are equipped with a visual-inertial sensor **500** that creates, updates, and refines descriptive point cloud **1845** using feature descriptors determined for room features indicated by points **1801, 1811, 1841, 1851, 1822** of room **1800** using the technology disclosed herein above under the Mapping sections. As depicted schematically in **FIG. 18,** descriptive point cloud **1845** includes coordinates and feature descriptors corresponding to the feature points **1801, 1811, 1841, 1851, 1822** of room **1800.** Visual-inertial sensor **500** prepares hybrid point grid **1855** of the room **1800** mapping space by reprojecting feature points **1801, 1811, 1841, 1851, 1822** of room **1800** onto 2D layers corresponding to various heights above (and including) the floor where feature points were found within the room **1800.** Accordingly, hybrid point grid **1855** provides a mapping of the space in room **1800** by stacked 2D layers indicating feature points corresponding to boundaries and objects in the room **1800.** In some implementations, objects **1856** corresponding to the wearers can be identified by the visual-inertial sensor **500** of the other wearer and reflected in hybrid point grid **1855.** Further, free space between the objects **1856** corresponding to the wearers is made available for display of AR presentation **1815**, in this case a virtualized rendering of a project schedule that the wearers are discussing during a business meeting, and communicated to the VR/AR presentation mechanisms of headsets **1805, 1825,** enabling the headsets **1805, 1825** to appropriately render AR presentation **1815** to appear within space between objects **1856** corresponding to the wearers.

Headsets **1805, 1825** can be communicatively coupled to a source of content for presenting AR presentation **1815** to the wearer(s). While depicted as a wireless connection to a hotspot coupled to a network gateway that further couples to a source of content for AR presentation **1815**, headsets **1805, 1825** can be coupled to presentation content using any of a wide variety of mechanisms, wired or wireless. Further, presentation content for rendering AR presentation **1815** can be downloaded and stored on some headsets **1805, 1825** implementations.

The foregoing operational principles are easily applied to other common AR applications such as gaming, socially enabled experiences and industrial applications. Like VR gaming, in AR gaming, game play is conducted by users while wearing a VR/AR presentation device. Gamers can move freely about the room(s) while the visual-inertial sensor **500** equipped VR/AR presentation device tracks the gamer' position. The VR presentation device manages positioning virtual things in the real world environment because of the accurate mapping of the real world environment provided by the visual-inertial sensor **500.** Accordingly, the AR gamer can participate in virtual battles in their own living room, accouter their kitchen with virtual overlays of 18th century kitchen items and so forth. Each virtual item can be positioned accurately and realistically into the gamer's real world using the position and localization information provided by the virtual-inertial sensor **500.**

In socially enabled experiences for example, video chat applications for VR can enable a user to conduct a video chat with their best friend Tom, and a virtual Tom (displayed using an AR goggles, VR headset, projected by robot or other presentation rendering devices) appears in a position of the user's house. The user can walk around virtual Tom, change the presentation - making him larger or smaller or even changing the rendering altogether clothing him in a hat and suit typically worn by Napoleon.

Many other applications of virtual-inertial sensor **500** equipped VR/AR presentation devices exist. Virtual shopping trips, remote real estate showings, bicycle rides captured and replayed during indoor cycling sessions, virtual flight instruction, indoor/outdoor position tracking for hikes, bike rides, motorcycle travel and so forth.

In each of the scenarios listed above, the VR/AR presentation device utilizes the technology disclosed herein in order to track its own location and to recognize the objects that it encounters. Also, since the VR/AR applications include many complex tasks, each with real-time constraints, it is beneficial that the sensing be done rapidly to accelerate the perception pipeline. In implementations, this can be achieved by offloading some computation from the main processor to the visual-inertial sensor **500.** In addition, since many VR/AR presentation devices can be wearable - or at least portable - the VR/AR presentation device carries limited storage capacity battery, energy consumption is a design point. In implementations, some computational tasks are off loaded from the main processor to the visual-inertial sensor **500** to reduce power consumption, thereby enabling implementations to achieve overall energy efficiency. Cost is an issue in VR/AR applications, since lowering the cost of the VR/AR presentation device makes VR/AR affordable to more customers. Hence cost can be another factor for sensor and guidance system design. In implementations, one low-cost grayscale sensor is used for localization tasks, and one colored sensor for recognition tasks. This design point enables these implementations to significantly reduce the cost over a stereo colored sensor designs without sacrificing performance.

**Processes**

**FIG. 19** is a representative method **1900** of guiding a mobile device using information from a camera with distance calculation and multi-axis inertial measuring unit (IMU). Flowchart **1900** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 19.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

**FIG. 19** includes process **1900** that begins at action **1910**, where image sets from a visual sensor are buffered. In some implementations, image sets are received from a visual sensor comprising at least one RGB sensing capable camera and from at least one other grayscale camera. The RGB camera(s) and grayscale camera(s) can be disposed at a distance relative to one another to form a region in which the fields of view at least partially overlap, thereby providing stereoscopic imaging capability. The visual sensor is disposed on a mobile platform, such as a robot, autonomous vehicle, or other autonomous or guided mobile platform.

Process **1900** continues at action **1920** where inertial measurements from a multi-axis inertial measuring unit (IMU) capable of providing measurement of at least acceleration are buffered. The inertial measuring unit can be collocated with the visual sensor or can be disposed at an offset thereto.

At action **1930**, the sets of image data are received at a visual inertial control unit.

At action **1940**, the sets of sensor data from the multi-axis IMU are received at a visual inertial control unit.

At action **1950**, the inertial data received is timestamped. The time stamping can be performed by an inertial measurement engine.

At action **1960**, inertial readouts in the timestamped inertial data are corrected for bias.

At action **1970**, the inertial readouts are scaled using a stored scale factor the corrected inertial data.

At action **1980**, the scaled inertial data are corrected for misalignment in the IMU to form localization data.

At action **1990**, imaging undistortion is performed on the sets of image data.

At action **1995**, the localization data and the undistorted sets of image data are provided across a communications interface to a host controlling a mobile platform.

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

**FIG. 20** is a representative method **2000** of using a hybrid point grid to guide a mobile device that includes a camera with distance calculation and multi-axis inertial measuring unit (IMU). Flowchart **2000** can be implemented at least partially with a computer or other data processing system, e.g., by one or more processors configured to receive or retrieve information, process the information, store results, and transmit the results. Other implementations may perform the actions in different orders and/or with different, fewer or additional actions than those illustrated in **FIG. 20.** Multiple actions can be combined in some implementations. For convenience, this flowchart is described with reference to the system that carries out a method. The system is not necessarily part of the method.

The method described in this section and other sections of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this method can readily be combined with sets of base features identified as implementations such as system overview, tracking, mapping, robot implementation, VR/AR implementation, etc.

**FIG. 20** includes process **2000** that begins at action **2010,** where sets of image data are received. In some implementations, the sets of image data include feature points and pose information. The pose information includes a location of the mobile device and view of the camera that captured the image data. The sets of image data are referred to collectively as keyrigs.

Process **2000** continues at action **2020** where the keyrigs are reviewed to select keyrig content to include in a point cloud of features, based upon comparisons of keyrig content with content of other selected keyrigs subject to one or more intelligent thresholds. As used herein, intelligent thresholds includes a threshold that is adaptively adjusted based upon device movement, sensor readings, situational or environmental variables (e.g., low light, fog, bright light, and so forth) or combinations thereof.

At action **2030,** for selected keyrigs, (a) new feature points in the keyrig are triangulated using feature points of keyrigs previously added to the point cloud of features to obtain feature points in a coordinate system of the device, and (b) coordinates of the feature points in the point cloud of features are aligned to a coordinate system having a z-axis aligned with gravity.

At action **2040,** a multilayered hybrid point grid is created from the feature points selected for the point cloud of features, using at least one layer of a multilayered 2D occupancy grid by the following:

At action **2050,** a 2D occupancy grid corresponding to one selected from a plurality of x-y layers covering the feature points in the point cloud of features is initialized.

At action **2060,** at least one layer of the occupancy grid is populated with points from the point cloud of features within a height range using ray tracing from an observed location of a point in the keyrig aligned to a corresponding point in the occupancy grid and a location of a corresponding point reprojected on the layer of the occupancy grid.

At action **2070,** cells along a ray between the aligned observed point and the corresponding point reprojected on the layer are found and the found cells are marked as empty.

At action **2080,** responsive to receiving a command to travel to a location, the occupancy grid is used to plan a path of travel to a location commanded and contemporaneously the descriptive point cloud is used while traveling the planned path to avoid colliding with obstructions.

Other implementations of the method described in this section can include a non-transitory computer readable storage medium storing instructions executable by a processor to perform any of the methods described above. Yet another implementation of the method described in this section can include a system including memory and one or more processors operable to execute instructions, stored in the memory, to perform any of the methods described above.

**Conclusion and Additional Implementations**

We describe a system and various implementations for guiding a mobile device that includes a camera with distance calculation and multi-axis inertial measuring unit (IMU).

Some additional implementations and features include:

In one implementation, described is a system including at least one camera and a multi-axis inertial measuring unit (IMU), and an interface to a mobile platform including one or more processors coupled to memory storing computer instructions to correct at least some estimated poses and locations of the mobile platform by maintaining a set of time dependent tracking states that include: (i) a pose, (ii) sensor configuration information and (iii) one or more frames of sensor readings including at least some frames from visual sensors which at least some frames include sets of 2D feature points located using image information from the visual sensors, and at least some frames from inertial sensors providing inertial data. The computer instructions are used to estimate the pose of the mobile platform, when executed on the processors. The implemented actions comprises of: (a) selecting two or more tracking states from the set of time dependent tracking states; (b) creating a 2D feature correspondences set comprising of common 2D feature points among the visual sensor frames from the selected tracking states; (c) triangulating 2D feature points from the 2D feature correspondences set to form a 3D point set; (d) selecting a subset of the 3D point set that includes 3D points having re-projection error within a threshold; (e) updating current poses for at least two of the tracking states within the set of time dependent tracking states subject to a criterion including reduction of a total of re-projection errors of the selected 3D points; and (f) guiding the mobile platform using the updated current pose determined for that at least two tracking states.

In one implementation, the above triangulation step further includes selecting 3D points having a triangulation error less than a determined number of pixels. In one implementation, the above triangulation step further includes adjusting the threshold for selecting 3d points to control propagation based upon a quantity of 3D points available to update poses in the set of time dependent tracking states. In one implementation, the 3D points are further refined to have lower reprojection error using a least squares function.

In one implementation, the number of tracking states in the set of time dependent tracking states is fixed and depends on the sensors. In one implementation, the number of tracking states in the set of time dependent tracking states is 30 in order to keep 1 second worth of visual sensor data for a 30 Hz camera. In one implementation, the number of tracking states in the set of time dependent tracking states is dynamically determined to maintain sensory data for a range of time. In one implementation, the number of tracking states in the set of time dependent tracking states is dynamically determined to maintain 1 second worth of sensor data. In one implementation, the number of tracking states in the set of time dependent tracking states is dynamically determined to maintain a manageable number of 2D feature points. In one implementation, the number of tracking states in the set of time dependent tracking states is dynamically determined to maintain less than 200 2D feature points.

In one implementation, time synchronization is performed for the a set of time dependent tracking states with a time maintained by a controller unit controlling the mobile platform, by updating the time associated with the time associated with at least one of the a set of time dependent tracking states by (i) a constant offset and (ii) a transfer delay.

In one implementation, the system further includes a motion detector that (a) tracks a set of inertial readings; (b) computes a variance for each dimension of a total of 3 dimensions of the set of inertial readings; (c) determines whether the mobile platform is moving or at rest based upon the variance computed; (d) whenever the mobile platform is determined to be moving, performing extended Kalman filtering on the set of time dependent tracking states to determine pose information from the set of time dependent tracking states; and (e) whenever the mobile platform is determined to be static providing a computed pose whenever the mobile platform is determined to be at rest; wherein the computed pose is determined by selectively performing at least one of: (i) propagating a zero velocity applied to location information of the pose and change orientation information of the mobile platform using information obtained from a gyroscopic sensor; and (ii) adding a noise factor to a previous pose . A variance above a threshold indicates a moving platform, and a variance below a threshold indicates a static platform

In one implementation, the system detects a number of IMU updates occurring after a successful image update; and switches to gyroscopic sensor propagation after N consecutive IMU updates are detected.

In one implementation, the system has the capability of detecting when one or more visual sensors has failed or is not updating or is insufficiently updating and whenever one or more visual sensors has failed or is not updating or is insufficiently updating, using the motion detector to control pose estimation.

In one implementation, the system has the capability of detecting a number of features in an image; and dynamically adjusting an exposure value of at least one visual sensor whenever a lack of features the image is detected.

In one implementation, the system has the capability of (a) calculating a location of at least one 2D feature in an image using optical flow; (b) reducing features to features existing along an epipolar line based upon a location calculated and a prediction of a camera pose; (c) checking for similarity between descriptors of the feature and descriptors for a corresponding feature from a previous frame; (d) determining whether number of features through optical flow is less than a number of features detected in a current frame, and whenever the number of features through optical flow is less than a number of features, detecting 2D corner features directly from an image at image regions without features; and (e) bin the image spatially, and adjust a number of features in each bin so that the number of features in the bins is balanced. The system can also link features in different images captured at different times by a same camera.

In one implementation, the system has the capability of correlating unmatched features for a camera, by: (a) collecting a set of features that are not matched to any other features by existing links; (b) collecting a set of available links that are do not match to a feature from the camera in a current time frame; (c) calculating a similarity score between each member in the set of features and each member in the set of available links; wherein similarity between a feature and a link is a best similarity score between a descriptor of the feature and descriptors of features in the link; and (d) when the similarity score is greater than a threshold, adding the feature to the link

Other implementations include methods including performing the actions of the system, non-transitory machine readable storage media storing program logic implementing such methods, substituents and components thereof, and devices incorporating any or combinations of the foregoing.

The terms and expressions employed herein are used as terms and expressions of description and not limitation. In addition, having described certain implementations of the technology disclosed, it will be apparent to those of ordinary skill in the art that other implementations incorporating the concepts disclosed herein can be used without departing from the scope of the technology disclosed and defined in the claims. Accordingly, the described implementations are to be considered in all respects as only illustrative and not restrictive.

**Claims**

1. A system of guiding a mobile platform in an unmapped area and without producing a map of the unmapped area, the system including:

   a mobile platform;
   a sensory interface (107) coupling to one or more sensors including at least some visual sensors and at least some inertial sensors, wherein the one or more sensors are configured to sense one or more of position, motion or environment of the mobile platform;
   a processor (106) coupled to the sensory interface (107) and the mobile platform to provide guidance and control, and further coupled to a computer readable storage medium (110) storing computer instructions configured for performing:

      maintaining a set of time dependent tracking states that include: (i) a pose and (ii) one or more frames of sensor readings including at least some frames from the at least some visual sensors wherein at least some frames include sets of 2D feature points located using image information from the at least some visual sensors;
      wherein each frame of sensor readings can include sensory information received from any one of a plurality of sensors available to the mobile platform;
      selecting two or more tracking states from the set of time dependent tracking states;
      creating a 2D feature correspondences set comprising of common 2D feature points among the visual sensor frames from the selected tracking states;
      triangulating 2D feature points from the 2D feature correspondences set to form a 3D point set;
      selecting a subset of the 3D point set that includes 3D points having re-projection error within a threshold;
      updating current poses for at least two of the tracking states within the set of time dependent tracking states subject to a criterion including reduction of a total of re-projection errors of the selected 3D points; and
      guiding the mobile platform in an unmapped area using the updated current pose determined for that at least two tracking states.

2. The system of claim 1, wherein triangulating further includes selecting 3D points having a triangulation error less than a determined number of pixels.

3. The system of claim 1 or 2, further including adjusting a threshold for selecting 3d points to control propagation based upon a quantity of 3D points available to update poses in the set of time dependent tracking states.

4. The system of one of claims 1 to 3, further configured for performing dynamically determining a window size including a number of tracking states in the set of time dependent tracking states by maintaining a fixed manageable window size depending upon a parameter of at least one sensor.

5. The system of one of claims 1 to 4, further configured for performing dynamically determining a window size including a number of tracking states in the set of time dependent tracking states by maintaining a range of time spanning using the window size determined.

6. The system of one of claims 1 to 5, further configured for performing dynamically determining a window size including a number of tracking states in the set of time dependent tracking states by maintaining a manageable number of 3D points.

7. The system of one of claims 1 to 6, further configured for performing synchronizing time associated with at least one of the a set of time dependent tracking states with a time maintained by a controller unit controlling the mobile platform, by updating the time associated with the time associated with at least one of the a set of time dependent tracking states by (i) a constant offset and (ii) a transfer delay.

8. The system of one of claims 1 to 6, further including: a motion detector tracking a set of inertial readings; and computing a variance for each dimension of a total of 3 dimensions of the set of inertial readings; determining whether the mobile platform is moving or at rest based upon the variance computed; and whenever the mobile platform is determined to be moving, performing extended Kalman filtering on the set of time dependent tracking states to determine pose information from the set of time dependent tracking states and whenever the mobile platform is determined to be static providing a computed pose whenever the mobile platform is determined to be at rest; wherein the computed pose is determined by selectively performing at least one of:

(i) propagating a zero velocity applied to location information of the pose and change orientation information of the mobile platform using information obtained from a gyroscopic sensor; and
(ii) adding a noise factor to a previous pose.

9. The system of claim 8, further configured for performing: detecting a number of IMU updates occurring after a successful image update; and switching to gyroscopic sensor propagation after N consecutive IMU updates are detected.

10. The system of claim 8 or 9, further configured for performing: detecting when one or more visual sensors has failed or is not updating or is insufficiently updating and whenever one or more visual sensors has failed or is not updating or is insufficiently updating, using the motion detector to control pose estimation.

11. The system of claim 10, wherein a variance above a threshold indicates a moving platform; and a variance below a threshold indicates a static platform.

12. The system of one of claims 1 to 11, further configured for performing: calculating a location of at least one 2D feature in an image using optical flow; reducing features to features existing along an epipolar line based upon a location calculated and a prediction of a camera pose; checking for similarity between descriptors of the feature and descriptors for a corresponding feature from a previous frame; determining whether number of features through optical flow is less than a number of features detected in a current frame, and whenever the number of features through optical flow is less than a number of features, detecting 2D corner features directly from an image at image regions without features; bin the image spatially, and adjust a number of features in each bin so that the number of features in the bins is balanced.

13. The system of claim 12, further configured for performing: linking features in different images captured at different times by a same camera.

14. The system of claim 12 or 13, further configured for performing: correlating unmatched features for a camera, by:

collecting a set of features that are not matched to any other features by existing links;
collecting a set of available links that are do not match to a feature from the camera in a current time frame;
calculating a similarity score between each member in the set of features and each member in the set of available links; wherein similarity between a feature and a link is a best similarity score between a descriptor of the feature and descriptors of features in the link; and when the similarity score is greater than a threshold, adding the feature to the link.

15. A computer implemented method of guiding a mobile platform in an unmapped area and without producing a map of the unmapped area, including:

maintaining a set of time dependent tracking states that include: (i) a pose and (ii) one or more frames of sensor readings including at least some frames from visual sensors available to the mobile platform wherein at least some frames include sets of 2D feature points located using image information from the visual sensors;
wherein each frame of sensor readings can include sensory information received from any one of a plurality of sensors available to the mobile platform;
selecting two or more tracking states from the set of time dependent tracking states;
creating a 2D feature correspondences set comprising of common 2D feature points among the visual sensor frames from the selected tracking states;
triangulating 2D feature points from the 2D feature correspondences set to form a 3D point set;
selecting a subset of the 3D point set that includes 3D points having re-projection error within a threshold;
updating current poses for at least two of the tracking states within the set of time dependent tracking states subject to a criterion including reduction of a total of re-projection errors of the selected 3D points; and
guiding the mobile platform in an unmapped area using the updated current pose determined for that at least two tracking states.

**Patentansprüche**

1. Ein System zur Führung einer mobilen Plattform in einem nicht kartographierten Gebiet und ohne Erstellung einer Karte des nicht kartographierten Gebiets, das System umfassend:

eine mobile Plattform;
eine sensorische Schnittstelle (107), die mit einem oder mehreren Sensoren einschließlich mindestens einiger visueller Sensoren und mindestens einiger Trägheitssensoren gekoppelt ist, wobei der eine oder die mehreren Sensoren so konfiguriert sind, dass sie eine oder mehrere von Position, Bewegung oder Umgebung der mobilen Plattform erfassen;
einen Prozessor (106), der mit der sensorischen Schnittstelle (107) und der mobilen Plattform gekoppelt ist, um Führung und Steuerung bereitzustellen, und der ferner mit einem computerlesbaren Speichermedium (110) gekoppelt ist, das Computerbefehle speichert, die zur Ausführung konfiguriert sind:

Aufrechterhaltung eines Satzes von zeitabhängigen Tracking-Zuständen, die umfassen: (i) eine Pose und (ii) einen oder mehrere Frames von Sensormesswerten einschließlich wenigstens einiger Frames von den wenigstens einigen visuellen Sensoren, wobei wenigstens einige Frames Sätze von 2D-Merkmalspunkten enthalten, die unter Verwendung von Bildinformationen von den wenigstens einigen visuellen Sensoren angeordnet sind;
wobei jeder Frame von Sensormesswerten sensorische Informationen enthalten kann, die von einem beliebigen einer Vielzahl von Sensoren empfangen werden, die der mobilen Plattform zur Verfügung stehen;
Auswählen von zwei oder mehr Tracking-Zuständen aus dem Satz von zeitabhängigen Tracking-Zuständen;
Erzeugen eines 2D-Merkmalskorrespondenzsatzes, der gemeinsame 2D-Merkmalspunkte unter den visuellen Sensor-Frames aus den ausgewählten Tracking-Zuständen umfasst;
Triangulieren von 2D-Merkmalspunkten aus dem 2D-Merkmalskorrespondenzsatz, um einen 3D-Punktsatz zu bilden;
Auswählen einer Teilmenge des 3D-Punktesatzes, die 3D-Punkte mit einem Rückprojektionsfehler innerhalb eines Schwellenwertes enthält;
Aktualisieren von aktuellen Posen für mindestens zwei der Tracking-Zustände innerhalb des Satzes von zeitabhängigen Tracking-Zuständen in Abhängigkeit von einem Kriterium, das eine Reduzierung der Gesamtzahl der Rückprojektionsfehler der ausgewählten 3D-Punkte einschließt; und
Führung der mobilen Plattform in einem nicht kartographierten Gebiet unter Verwendung der aktualisierten aktuellen Pose, die für diese mindestens zwei Tracking-Zustände bestimmt wurde.

2. Das System nach Anspruch 1, wobei die Triangulation ferner das Auswählen von 3D-Punkten umfasst, die einen Triangulationsfehler von weniger als einer bestimmten Anzahl von Pixeln aufweisen.

3. Das System nach Anspruch 1 oder 2, ferner umfassend die Anpassung eines Schwellenwertes für die Auswahl von 3D-Punkten zur Kontrolle der Ausbreitung auf der Grundlage einer Menge von 3D-Punkten, die zur Aktualisierung von Posen in der Menge der zeitabhängigen Tracking-Zustände zur Verfügung stehen.

4. Das System nach einem der Ansprüche 1 bis 3, ferner konfiguriert zur Durchführung einer dynamischen Bestimmung einer Fenstergröße einschließlich einer Anzahl von Tracking-Zuständen in der Menge der zeitabhängigen Tracking-Zustände durch Aufrechterhaltung einer festen handhabbaren Fenstergröße in Abhängigkeit von einem Parameter mindestens eines Sensors.

5. Das System nach einem der Ansprüche 1 bis 4, ferner konfiguriert zur Durchführung einer dynamischen Bestimmung einer Fenstergröße einschließlich einer Anzahl von Tracking-Zuständen in dem Satz von zeitabhängigen Tracking-Zuständen durch Aufrechterhaltung eines Zeitbereichs, der sich unter Verwendung der bestimmten Fenstergröße erstreckt.

6. Das System nach einem der Ansprüche 1 bis 5, ferner konfiguriert zur Durchführung einer dynamischen Bestimmung einer Fenstergröße einschließlich einer Anzahl von Tracking-Zuständen in der Menge der zeitabhängigen Tracking-Zustände durch Aufrechterhaltung einer handhabbaren Anzahl von 3D-Punkten.

7. Das System nach einem der Ansprüche 1 bis 6, ferner konfiguriert zum Durchführen einer Synchronisierung der Zeit, die mit mindestens einem der zeitabhängigen Tracking-Zustände aus der Menge der zeitabhängigen Tracking-Zustände verknüpft ist, mit einer Zeit, die von einer die mobile Plattform steuernden Steuereinheit verwaltet wird, durch Aktualisieren der Zeit, die mit der Zeit verknüpft ist, die mit mindestens einem der zeitabhängigen Tracking-Zustände aus der Menge der zeitabhängigen Tracking-Zustände verknüpft ist, durch (i) einen konstanten Offset und (ii) eine Übertragungsverzögerung.

8. Das System nach einem der Ansprüche 1 bis 6, ferner umfassend: einen Bewegungssensor, der einen Satz von Trägheitsmesswerten überwacht; und die Berechnung einer Varianz für jede Dimension von insgesamt 3 Dimensionen des Satzes von Trägheitsmesswerten; die Bestimmung, ob sich die mobile Plattform bewegt oder sich in Stillstand befindet, auf der Grundlage der berechneten Varianz; und immer dann, wenn bestimmt wird, dass sich die mobile Plattform bewegt, Durchführen einer erweiterten Kalman-Filterung auf dem Satz zeitabhängiger Tracking-Zustände, um Posen-Informationen aus dem Satz zeitabhängiger Tracking-Zustände zu bestimmen, und immer dann, wenn bestimmt wird, dass die mobile Plattform statisch ist, Bereitstellen einer berechneten Pose, immer dann, wenn bestimmt wird, dass die mobile Plattform sich in Stillstand befindet; wobei die berechnete Pose durch selektives Durchführen mindestens eines der folgenden Verfahren bestimmt wird:

(i) Propagieren einer Nullgeschwindigkeit, die auf Positionsinformationen der Pose und Änderungsorientierungsinformationen der mobilen Plattform angewendet wird, unter Verwendung von Informationen, die von einem gyroskopischen Sensor erhalten werden; und
(ii) Hinzufügen eines Rauschfaktors zu einer früheren Pose.

9. Das System nach Anspruch 8, ferner konfiguriert zur Durchführung von: Erkennung einer Anzahl von IMU-Aktualisierungen, die nach einer erfolgreichen Bildaktualisierung auftreten; und Umschalten auf gyroskopische Sensorpropagation, nachdem N aufeinanderfolgende IMU-Aktualisierungen erkannt wurden.

10. Das System nach Anspruch 8 oder 9, ferner konfiguriert zur Durchführung von:
Erkennung, wenn ein oder mehrere visuelle Sensoren ausgefallen sind oder sich nicht oder nur unzureichend aktualisieren, und wann immer ein oder mehrere visuelle Sensoren ausgefallen sind oder sich nicht oder nur unzureichend aktualisieren, unter Verwendung des Bewegungssensors zur Steuerung der Posenabschätzung.

11. Das System nach Anspruch 10, wobei eine Varianz oberhalb eines Schwellenwertes eine sich bewegende Plattform anzeigt; und eine Varianz unterhalb eines Schwellenwertes eine statische Plattform anzeigt.

12. Das System nach einem der Ansprüche 1 bis 11, ferner konfiguriert zur Durchführung von: Berechnen einer Position mindestens eines 2D-Merkmals in einem Bild unter Verwendung des optischen Flusses; Reduzieren von Merkmalen auf Merkmale, die entlang einer epipolaren Linie vorhanden sind, auf der Grundlage einer berechneten Position und einer Vorhersage einer Kameraposition; Prüfen auf Ähnlichkeit zwischen Deskriptoren des Merkmals und Deskriptoren für ein entsprechendes Merkmal aus einem vorhergehenden Bild; Bestimmen, ob die Anzahl der Merkmale durch optischen Fluss geringer ist als eine Anzahl von Merkmalen, die in einem aktuellen Bild erkannt wurden, und immer dann, wenn die Anzahl der Merkmale durch optischen Fluss geringer ist als eine Anzahl von Merkmalen, Erkennen von 2D-Eckenmerkmalen direkt aus einem Bild in Bildbereichen ohne Merkmale; räumliches Einlagern des Bildes und Einstellen einer Anzahl von Merkmalen in jedem Einlagerungsbehälter, so dass die Anzahl der Merkmale in den Einlagerungsbehältern ausgeglichen ist.

13. Das System nach Anspruch 12, ferner konfiguriert zur Durchführung von: Verknüpfung von Merkmalen in verschiedenen Bildern, die zu unterschiedlichen Zeiten von derselben Kamera aufgenommen wurden.

14. Das System nach Anspruch 12 oder 13, ferner konfiguriert zur Durchführung von: Korrelieren nicht übereinstimmender Merkmale für eine Kamera durch:

Sammeln eines Satzes von Merkmalen, die mit keinen anderen Merkmalen durch bestehende Verknüpfungen verknüpft sind; Sammeln eines Satzes verfügbarer Verknüpfungen, die mit einem Merkmal von der Kamera in einem aktuellen Zeitrahmen nicht übereinstimmen; Berechnen einer Ähnlichkeitsbewertung zwischen jedem Mitglied in dem Satz von Merkmalen und jedem Mitglied in dem Satz verfügbarer Verknüpfungen; wobei Ähnlichkeit zwischen einem Merkmal und einer Verknüpfung eine beste Ähnlichkeitsbewertung zwischen einem Deskriptor des Merkmals und Deskriptoren von Merkmalen in der Verknüpfung ist; und wenn die Ähnlichkeitsbewertung größer als ein Schwellenwert ist, Hinzufügen des Merkmals zu der Verknüpfung.

15. Ein computerimplementiertes Verfahren zur Führung einer mobilen Plattform in einem nicht kartographierten Gebiet und ohne Erstellung einer Karte des nicht kartographierten Gebiets, umfassend:

die Aufrechterhaltung eines Satzes zeitabhängiger Tracking-Zustände, die umfassen: (i) eine Pose und (ii) einen oder mehrere Frames von Sensormesswerten einschließlich mindestens einiger Frames von visuellen Sensoren, die für die mobile Plattform verfügbar sind, wobei mindestens einige Frames Sätze von 2D-Merkmalspunkten enthalten, die unter Verwendung von Bildinformationen von den visuellen Sensoren lokalisiert werden; wobei jeder Frame von Sensormesswerten umfassende sensorische Informationen enthalten kann, die von einem beliebigen einer Vielzahl von Sensoren empfangen werden, die für die mobile Plattform verfügbar sind; Auswählen von zwei oder mehr Tracking-Zuständen aus dem Satz von zeitabhängigen Tracking-Zuständen; Erzeugen eines 2D-Merkmalskorrespondenzsatzes, der gemeinsame 2D-Merkmalspunkte unter den Frames der visuellen Sensoren aus den ausgewählten Tracking-Zuständen umfasst; Triangulieren von 2D-Merkmalspunkten aus dem 2D-Merkmalskorrespondenzsatz, um einen 3D-Punktsatz zu bilden; Auswählen einer Teilmenge des 3D-Punktesatzes, die 3D-Punkte mit einem Rückprojektionsfehler innerhalb eines Schwellenwerts umfasst; Aktualisieren aktueller Posen für mindestens zwei der Tracking-Zustände innerhalb des Satzes zeitabhängiger Tracking-Zustände in Abhängigkeit eines Kriteriums, das eine Reduzierung der gesamten Rückprojektionsfehler der ausgewählten 3D-Punkte umfasst; und Führung der mobilen Plattform in einem nicht kartographierten Bereich unter Verwendung der aktualisierten aktuellen Pose, die für diese mindestens zwei Tracking-Zustände bestimmt wurde.

## Revendications

1. Un système de guidage d'une plate-forme mobile dans une zone non cartographiée et sans produire de carte de la zone non cartographiée, le système comprenant :

une plate-forme mobile ;
une interface sensorielle (107) couplée à un ou plusieurs capteurs comprenant au moins certains capteurs visuels et au moins certains capteurs inertiels, dans laquelle le ou les capteurs sont configurés pour détecter une ou plusieurs des positions, des mouvements ou de l'environnement de la plate-forme mobile ;
un processeur (106) couplé à l'interface sensorielle (107) et à la plate-forme mobile pour fournir un guidage et un contrôle, et couplé en outre à un support de stockage lisible par ordinateur (110) stockant des instructions informatiques configurées pour être exécutées :

le maintien d'un ensemble d'états de suivi dépendant du temps qui comprend : (i) une pose et (ii) une ou plusieurs frames de relevés de capteurs comprenant au moins quelques frames provenant des au moins quelques capteurs visuels, dans lesquelles au moins quelques frames comprennent des ensembles de points caractéristiques 2D situés en utilisant des informations d'image provenant des au moins quelques capteurs visuels ;

dans lequel chaque frame de relevés de capteurs peut inclure des informations sensorielles reçues de l'un quelconque d'une pluralité de capteurs disponibles pour la plate-forme mobile ;

la sélection de deux ou plusieurs états de suivi parmi l'ensemble des états de suivi dépendant du temps ;

la création d'un ensemble de correspondances de caractéristiques 2D comprenant des points communs de caractéristiques 2D parmi les frames de capteurs visuels à partir des états de suivi sélectionnés ;

la triangulation de points de caractéristiques 2D à partir de l'ensemble de correspondances de caractéristiques 2D pour former un ensemble de points 3D ;

la sélection d'un sous-ensemble de l'ensemble de points 3D qui comprend des points 3D présentant une erreur de reprojection dans les limites d'un seuil ;

la mise à jour des poses actuelles pour au moins deux des états de suivi dans l'ensemble des états de suivi dépendant du temps, sous réserve d'un critère comprenant la réduction d'un total d'erreurs de reprojection des points 3D sélectionnés ; et

le guidage de la plate-forme mobile dans une zone non cartographiée en utilisant la pose actuelle actualisée déterminée pour ces au moins deux états de suivi.

2. Le système de la revendication 1, dans lequel la triangulation comprend en outre la sélection de points 3D ayant une erreur de triangulation inférieure à un nombre déterminé de pixels.

3. Le système de la revendication 1 ou 2, comprenant en outre l'ajustement d'un seuil pour la sélection de points 3D afin de contrôler la propagation en fonction d'une quantité de points 3D disponibles pour mettre à jour les poses dans l'ensemble des états de suivi dépendant du temps.

4. Le système de l'une des revendications 1 à 3, configuré en outre pour déterminer dynamiquement une taille de fenêtre incluant un certain nombre d'états de suivi dans l'ensemble des états de suivi dépendant du temps en maintenant une taille de fenêtre fixe et gérable en fonction d'un paramètre d'au moins un capteur.

5. Le système de l'une des revendications 1 à 4, configuré en outre pour déterminer dynamiquement une taille de fenêtre incluant un certain nombre d'états de suivi dans l'ensemble des états de suivi dépendant du temps en maintenant une plage de temps utilisant la taille de fenêtre déterminée.

6. Le système de l'une des revendications 1 à 5, configuré en outre pour déterminer dynamiquement une taille de fenêtre incluant un certain nombre d'états de suivi dans l'ensemble des états de suivi dépendant du temps en maintenant un nombre gérable de points 3D.

7. Le système de l'une des revendications 1 à 6, configuré en outre pour effectuer une synchronisation du temps associé à au moins un des états de suivi dépendant du temps avec un temps maintenu par une unité de contrôle contrôlant la plate-forme mobile, en mettant à jour le temps associé au temps associé à au moins un des états de suivi dépendant du temps par (i) un décalage constant et (ii) un retard de transfert.

8. Le système de l'une des revendications 1 à 6, comprenant en outre : un détecteur de mouvement suivant un ensemble de relevés inertiels ; et calcul d'une variance pour chaque dimension d'un total de 3 dimensions de l'ensemble de relevés inertiels ; détermination du fait que la plate-forme mobile est en mouvement ou au repos en fonction de la variance calculée ; et chaque fois qu'il est déterminé que la plate-forme mobile est en mouvement, effectuer un filtrage de Kalman étendu sur l'ensemble des états de suivi dépendant du temps pour déterminer les informations de pose à partir de l'ensemble des états de suivi dépendant du temps et chaque fois qu'il est déterminé que la plate-forme mobile est statique, fournir une pose calculée chaque fois qu'il est déterminé que la plate-forme mobile est au repos ; dans lequel la pose calculée est déterminée en effectuant sélectivement au moins l'une des opérations suivantes :

(i) la propagation d'une vitesse nulle appliquée aux informations de localisation de la pose et aux informations de changement d'orientation de la plate-forme mobile en utilisant les informations obtenues à partir d'un capteur gyroscopique ; et

(ii) en ajoutant un facteur de bruit à une pose précédente.

9. Le système de la revendication 8, configuré en outre pour effectuer : la détection d'un certain nombre de mises à jour de l'IMU survenant après une mise à jour d'image réussie ; et le passage à la propagation par capteur gyroscopique après la détection de N mises à jour consécutives de l'IMU

10. Le système de la revendication 8 ou 9, configuré en outre pour effectuer les opérations suivantes : détection d'une défaillance d'un ou de plusieurs capteurs visuels ou d'une mise à jour insuffisante ou inexistante de ceux-ci et, lorsqu'un ou plusieurs capteurs visuels sont défaillants ou ne sont pas mis à jour ou ne le sont pas suffisamment, utilisation du détecteur de mouvement pour contrôler l'estimation de la pose.

11. Le système de la revendication 10, dans lequel une variance supérieure à un seuil indique une plate-forme mobile ; et une variance inférieure à un seuil indique une plate-forme statique.

12. Le système de l'une des revendications 1 à 11, configuré en outre pour l'exécution : calculer l'emplacement d'au moins une caractéristique 2D dans une image en utilisant un flux optique ; réduire les caractéristiques aux caractéristiques existant le long d'une ligne épipolaire sur la base d'un emplacement calculé et d'une prédiction de la pose d'une caméra ; vérifier la similitude entre les descripteurs de la caractéristique et les descripteurs d'une caractéristique correspondante d'une frame précédente ; déterminer si le nombre d'éléments dans le flux optique est inférieur au nombre d'éléments détectés dans une frame actuelle, et lorsque le nombre d'éléments dans le flux optique est inférieur au nombre d'éléments, détecter des éléments de coin en 2D directement à partir d'une image dans les zones de l'image qui ne présentent pas d'éléments ; mettre l'image dans un bac dans l'espace, et ajuster un nombre d'éléments dans chaque bac de manière à équilibrer le nombre d'éléments dans les bacs.

13. Le système de la revendication 12, configuré en outre pour effectuer : la liaison d'éléments dans différentes images capturées à différents moments par une même caméra.

14. Le système de la revendication 12 ou 13, configuré en outre pour effectuer : la corrélation de caractéristiques non appariées pour une caméra, en :
collectant un ensemble de caractéristiques qui ne sont pas mises en correspondance avec d'autres caractéristiques par des liens existants ; collectant un ensemble de liens disponibles qui ne sont pas mis en correspondance avec une caractéristique de la caméra dans un frame actuel ; calculant un score de similarité entre chaque membre dans l'ensemble de caractéristiques et chaque membre dans l'ensemble de liens disponibles ; dans lequel la similarité entre une caractéristique et un lien est un meilleur score de similarité entre un descripteur de la caractéristique et des descripteurs de caractéristiques dans le lien ; et lorsque le score de similarité est supérieur à un seuil, ajoutant la caractéristique au lien.

15. Une méthode mise en œuvre par ordinateur pour guider une plate-forme mobile dans une zone non cartographiée et sans produire de carte de la zone non cartographiée, comprenant

le maintien d'un ensemble d'états de suivi dépendant du temps qui comprend : (i) une pose et (ii) une ou plusieurs frames de relevés de capteurs comprenant au moins quelques frames provenant de capteurs visuels disponibles pour la plate-forme mobile, dans laquelle au moins quelques frames comprennent des ensembles de points caractéristiques 2D localisés en utilisant des informations d'image provenant des capteurs visuels ; dans laquelle chaque frame de relevés de capteurs peut comprendre des informations sensorielles reçues de l'un quelconque d'une pluralité de capteurs disponibles pour la plate-forme mobile ;
la sélection de deux ou plusieurs états de suivi parmi l'ensemble des états de suivi dépendant du temps ;
la création d'un ensemble de correspondances de caractéristiques 2D comprenant des points communs de caractéristiques 2D parmi les frames des capteurs visuels à partir des états de suivi sélectionnés ;
la triangulation de points de caractéristiques 2D à partir de l'ensemble de correspondances de caractéristiques 2D pour former un ensemble de points 3D ;
la sélection d'un sous-ensemble de l'ensemble de points 3D qui comprend des points 3D présentant une erreur de reprojection dans les limites d'un seuil ;
la mise à jour des poses actuelles pour au moins deux des états de suivi dans l'ensemble des états de suivi dépendant du temps, sous réserve d'un critère comprenant la réduction d'un total d'erreurs de reprojection des points 3D sélectionnés ; et

le guidage de la plate-forme mobile dans une zone non cartographiée en utilisant la pose actuelle actualisée déterminée pour ces au moins deux états de suivi.

**FIG. 1**

**FIG. 2**

Process 300

FIG. 3

| Time Stamping 404 | Bias Correction 406 | Scale Correction 408 | Mis-align. Correction 410 | IMU-Image Coord. Xformation 412 | Motion Detection 414 |
| --- | --- | --- | --- | --- | --- |

IMU Engine 402

Inertial Component 112

**FIG. 4**

Visual Inertial Sensor
500

Camera 1

508

Inertial
Measurement
Unit (IMU)
502

Output to
Host
device

Control Unit
(CU)
100

514

Camera 2

510

**FIG. 5**

Effective
Range of
Depth

Process 600

605 — computing a variance on a set of inertial data readings of a mobile unit

610 — variance greater than a predetermined threshold

—YES—    —NO—

615 — mobile unit is "moving"

625 — mobile unit is "static"

620 — estimate a propagated pose based upon inertial data readings

adding noise to a previous pose of the mobile unit

change orientation of the mobile unit based on gyroscope inertial data readings

estimate a propagated pose for the mobile unit assuming zero velocity

630    635    640

**FIG. 6**

EP 3 447 448 B1

**FIG. 7**

EP 3 447 448 B1

FIG. 8

**Process 900**

910 — receiving a location of the mobile unit and perspective, including view direction, of the camera, referred to collectively as an initial pose

920 — while waiting for a new frame, between successive camera frames, updating the initial pose using inertial data from the multi-axis IMU, to generate a propagated pose

930 — correcting drift between the propagated pose, based on the inertial data, and an actual perspective of a new pose, using the new frame captured by the camera

940 — using the propagated pose, estimating an overlap between the successive camera frames to reduce computation requirements, correlating the new frame with a previous frame by 2D comparison of the successive camera frames, beginning with the estimated overlap

950 — retrieving at least some feature points within a field of view of the propagated pose from a 3D map using the propagated pose

960 — extracting new features from the new frame

970 — matching the extracted new features to the retrieved feature points based on (1) reuse of matched features from the previous frame and (2) matching of features in the new frame with reprojected feature positions from the 3D map onto a 2D view from a perspective of the propagated pose, producing a list of matching features

980 — calculating a visually corrected pose using positions of the matching features in the list of matching feature to determine a perspective from which the new frame was viewed by the camera

990 — responsive to requests for location of the mobile unit and/or the perspective of the camera, providing data based on one or both of the propagated pose, based on the inertial data, and the visually corrected pose

## FIG. 9

EP 3 447 448 B1

1000

| T₀ 1002 | T₁ 1004 | Tₙ₋₁ 1006 | Tₙ 1010 |
|---|---|---|---|

**T₀ 1002**

Timestamp
Pose
Sensor Configuration
Frame 1
Frame 2
⋮
Frame A

**T₁ 1004**

Timestamp
Pose
Sensor Configuration
Frame 1

▪   ▪   ▪   ▪

**Tₙ₋₁ 1006**

Timestamp
Pose
Sensor Configuration
Frame 1
Frame 2
⋮
Frame B

**Tₙ 1010**

Timestamp Pose
Sensor Configuration
Frame 1
Frame 2
⋮
Frame C

**FIG. 10**

Process 1100

1110 — selecting two or more tracking states from the set of time dependent tracking states

1120 — creating a 2D feature correspondences set comprising of common 2D feature points among the visual sensor frames from the selected tracking states

1130 — triangulating 2d feature points from the selected tracking states to form a set of 3d point set

1140 — selecting a subset of the 3d point set that includes 3d points having low re-projection error

1150 — updating current poses for two or more of the tracking states within the set of time dependent tracking states subject to a criterion including reduction of a total of re-projection errors of the selected 3D points

**FIG. 11**

EP 3 447 448 B1

**1200A**

FIG. 12A

**Process 1200B**

1215 — Keyrigs > 50 and fast recovery needed?

Yes

1225 — perform selecting best match (on Bag-of-Words features) among the keyrigs, and use the best-matched keyrig's pose as end-result

1235 — System well on track before lost?

Yes

1245 — search over only the local (e.g., most recent x keyrigs) keyrigs for fast recovery

1255 — System needs multiple hypotheses ?

Yes

1265 — use the few best matches (on Bag-of-Words features)

1275 — Use a default search strategy

**FIG. 12B**

1300

1302

FIG. 13

Process 1400

1410 — receiving sets of image data including feature points and pose information, the pose information including a location of the mobile device and view of the camera that captured the image data, the sets referred to collectively as keyrigs

1420 — reviewing keyrigs to select keyrig content to include in a point cloud of 3d points

1430 — randomly select a first subset of free keyrigs

1440 — select a second subset of free keyrigs that share a field of view with keyrigs in the first subset of free keyrigs

1450 — classify any keyrig not included in the first and second subsets of free keyrig as fixed keyrig

1460 — classify 3d points in a point cloud into 3 categories
(i) free 3d point: 3d points within a viewpoint of more than two keyrigs, including at least one free keyrig
(ii) semi-free 3d point: 3d points within a viewpoint of one free keyrig
(iii) fixed 3d point: 3d points within a viewpoint of only fixed keyrigs

1470 — refining the point cloud to correct the estimated poses and locations of the free 3d points

FIG. 14

1500

FIG. 15

FIG. 16

FIG. 17

FIG. 18

EP 3 447 448 B1

Process 1900

buffering image sets from a visual sensor comprising at least one RGB sensing capable camera and from at least one other grayscale camera disposed at a distance relative to one another to form a region in which the fields of view at least partially overlap, thereby providing stereoscopic imaging capability

buffering inertial measurements from a multi-axis inertial measuring unit (IMU) capable of providing measurement of at least acceleration

receiving at the visual inertial control unit sensor data from the multi-axis IMU

receiving at the visual inertial control unit sensor data from the multi-axis IMU

time stamping by an inertial measurement engine the inertial data received

correcting inertial readouts in the timestamped inertial data for bias

scaling the inertial readouts using a stored scale factor the corrected inertial data

correcting the scaled inertial data for misalignment in the IMU to form localization data

performing imaging undistortion on the sets of image data

providing across a communications interface the localization data and the undistorted sets of image data to a host controlling a mobile platform

**FIG. 19**

Process 2000

**2010** — receiving sets of image data including feature points and pose information, the pose information including a location of the mobile device and view of the camera that captured the image data, the sets referred to collectively as keyrigs

**2020** — reviewing the keyrigs to select keyrig content to include in a point cloud of features, based upon comparisons of keyrig content with content of other selected keyrigs subject to one or more intelligent thresholds

**2030** — for selected keyrigs, (a) triangulating new feature points in the keyrig using feature points of keyrigs previously added to the point cloud of features to obtain feature points in a coordinate system of the device, and (b) aligning coordinates of the feature points in the point cloud of features to a coordinate system having a z-axis aligned with gravity

**2040** — creating a multilayered hybrid point grid from the feature points selected for the point cloud of features, using at least one layer of a multilayered 2D occupancy grid, including:

**2050** — initializing a 2D occupancy grid corresponding to one selected from a plurality of x-y layers covering the feature points in the point cloud of features

**2060** — populating at least one layer of the occupancy grid with points from the point cloud of features within a height range using ray tracing from an observed location of a point in the keyrig aligned to a corresponding point in the occupancy grid and a location of a corresponding point reprojected on the layer of the occupancy grid

**2070** — finding cells along a ray between the aligned observed point and the corresponding point reprojected on the layer and marking the found cells as empty

**2080** — responsive to receiving a command to travel to a location, using the occupancy grid to plan a path of travel to a location commanded and contemporaneously using the descriptive point cloud while traveling the planned path to avoid colliding with obstructions

## FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016209217 A1

**Non-patent literature cited in the description**

- *ORB feature detector and binary descriptor,* 17 August 2016, http://scikit-image.org/docs/dev/auto_examples/plot_orb.html

- **ETHAN RUBLEE et al.** *ORB: an efficient alternative to SIFT or SURF*
- *Camera Calibration and 3D Reconstruction,* 22 August 2016, http://docs.opencv.org/master/d9/d0c/group_calib3D.html#gsc.tab=0